# EUROPEAN PATENT SPECIFICATION

(11) **EP 2 286 341 B1**
(45) Date of publication and mention of the grant of the patent: **03.06.2015**
(21) Application number: 09733928.7
(22) Date of filing: 10.04.2009
(51) Int. Cl.: G06F 12/02

(54) **METHOD AND SYSTEM FOR STORAGE ADDRESS RE-MAPPING FOR A MULTI-BANK MEMORY DEVICE**
VERFAHREN UND SYSTEM ZUR SPEICHERADRESSEN-UMABBILDUNG FÜR EINE MEHRBANK-SPEICHERANORDNUNG
SYSTÈME ET PROCÉDÉ DE RE-MAPPAGE D'ADRESSE DE STOCKAGE POUR UN DISPOSITIF DE MÉMOIRE MULTIBANC

(30) Priority: 25.04.2008 US 110050
(43) Date of publication of application: 23.02.2011
(73) Proprietor: SanDisk Technologies Inc., Plano, Texas 75024 (US)
(72) Inventor: SINCLAIR, Alan, W., Maddiston Falkirk FK2 0BU (GB)
(74) Representative: Hitchcock, Esmond Antony
(86) International application number: PCT/US2009/040153
(87) International publication number: WO 2009/131851

(56) References cited:
- US-A1- 2005 144 361
- US-A1- 2008 034 154

## Description

### TECHNICAL FIELD

This application relates generally to data communication between operating systems and memory devices. More specifically, this application relates to the operation of memory systems, such as multi-bank re-programmable non-volatile semiconductor flash memory, and a host device to which the memory is connected or connectable.

### BACKGROUND

When writing data to a conventional flash data memory system, a host typically assigns unique logical addresses to sectors, clusters or other units of data within a continuous virtual address space of the memory system. The host writes data to, and reads data from, addresses within the logical address space of the memory system. The memory system then commonly maps data between the logical address space and the physical blocks or metablocks of the memory, where data is stored in fixed logical groups corresponding to ranges in the logical address space. Generally, each fixed logical group is stored in a separate physical block of the memory system. The memory system keeps track of how the logical address space is mapped into the physical memory but the host is unaware of this. The host keeps track of the addresses of its data files within the logical address space but the memory system operates without knowledge of this mapping.

A drawback of memory systems that operate in this manner is fragmentation. For example, data written to a solid state disk (SSD) drive in a personal computer (PC) operating according to the NTFS file system is often characterized by a pattern of short runs of contiguous addresses at widely distributed locations within the logical address space of the drive. Even if the file system used by a host allocates sequential addresses for new data for successive files, the arbitrary pattern of deleted files causes fragmentation of the available free memory space such that it cannot be allocated for new file data in blocked units.

Flash memory management systems tend to operate by mapping a block of contiguous logical addresses to a block of physical addresses. When a short run of addresses from the host is updated in isolation, the full logical block of addresses containing the run must retain its long-term mapping to a single block. This necessitates a garbage collection operation within the logical-to-physical memory management system, in which all data not updated by the host within the logical block is relocated to consolidate it with the updated data. In multi-bank flash memory systems, where data may be stored blocks in discrete flash memory banks that make up the multi-bank system, the consolidation process may be magnified. This is a significant overhead, which may severely restrict write speed and memory life.

US 2005/0144361 discloses a system/method where data is stored in metablocks which span over a plurality of flash memory banks and which are addressed using host logical block addresses.

### BRIEF SUMMARY

In order to address the need for improved memory management in a multi-bank memory system, methods are disclosed herein. According to a first embodiment, a method of transferring data between a host system and a re-programmable non-volatile mass storage system is disclosed. The method includes receiving data associated with host logical block address (LBA) addresses assigned by the host system and allocating a megablock of contiguous storage LBA addresses for addressing the data associated with the host LBA addresses, the megablock of contiguous storage LBA addresses comprising at least one block of memory cells in each of a plurality of banks of memory cells in the mass storage system and addressing only unwritten capacity upon allocation. Re-mapping is done for each of the host LBA addresses for the received data to the megablock of contiguous storage LBA addresses, where each storage LBA address is sequentially assigned in a contiguous manner to the received data in an order the received data is received regardless of the host LBA address. Also, a block in a first of the plurality of banks is flushed independently of a block in a second of the plurality of banks, wherein flushing the block in the first bank includes reassigning host LBA addresses for valid data from storage LBA addresses of the block in the first bank to contiguous storage LBA addresses in a first relocation block, and flushing the block in the second bank includes reassigning host LBA addresses for valid data from storage LBA addresses of the block in the second bank to contiguous storage LBA addresses in a second relocation block.

According to another embodiment, a method of transferring data between a host system and a re-programmable non-volatile mass storage system is provided, where the mass storage system has a plurality of banks of memory cells and each of the plurality of banks is arranged in blocks of memory cells that are erasable together. The method includes re-mapping host logical block address (LBA) addresses for received host data to a megablock of storage LBA addresses, the megablock of storage LBA addresses having at least one block of memory cells in each of the plurality of banks of memory cells. Host LBA addresses for received data are assigned in a contiguous manner to storage LBA addresses in megapage order within the megablock in an order data is received regardless of the host LBA address, where each megapage includes a metapage for each of the blocks of the megablock. The method further includes independently performing flush operations in each of the banks. A flush operation involves reassigning host LBA addresses for valid data from storage LBA addresses of a block in a particular bank to contiguous storage LBA addresses in a relocation block within the particular bank.

Other features and advantages of the invention will become apparent upon review of the following drawings, detailed description and claims.

### BRIEF DESCRIPTION OF THE DRAWINGS

FIG. 1 illustrates a host connected with a memory system having multi-bank non-volatile memory.
FIG. 2 is an example block diagram of an example flash memory system controller for use in the multi-bank non-volatile memory of FIG. 1.
FIG. 3 is an example one flash memory bank suitable as one of the flash memory banks illustrated in FIG. 1.
FIG. 4 is a representative circuit diagram of a memory cell array that may be used in the memory bank of FIG. 3.
FIG. 5 illustrates an example physical memory organization of the memory bank of FIG. 3.
FIG. 6 shows an expanded view of a portion of the physical memory of FIG. 5.
FIG. 7 illustrates a physical memory organization of the multiple banks in the multi-bank memory of FIG. 1.
FIG. 8 illustrates a typical pattern of allocated and free clusters in a host LBA address space.
FIG. 9 illustrates a pattern of allocation of clusters by blocks according to one disclosed implementation.
FIG. 10 illustrates an implementation of storage address re-mapping between a host and a memory system where the memory manager of the memory system incorporates the storage addressing re-mapping function.
FIG. 11 illustrates an alternate implementation of storage address re-mapping shown in FIG. 10.
FIG. 12 illustrates an implementation of storage address re-mapping where the functionality is located on the host.
FIG. 13 is a flow diagram of a multi-bank write algorithm for use in the systems of FIGS. 10-12.
FIG. 14 is a state diagram of the allocation of blocks of clusters within an individual bank of the memory system.
FIG. 15 is a flow diagram of a flush operation that may be independently applied to each bank of a multi-bank memory system.
FIG. 16 illustrates a DLBA run distribution in a megablock.
FIG. 17 illustrates a megablock write procedure and storage address table generation for the DLBA distribution of FIG. 16.
FIG. 18 illustrates an example rearrangement of DLBA runs after blocks in the megablock of FIG. 16 have been flushed.
FIG. 19 illustrates a flush operation in DLBA address space of one bank in the multi-bank memory and corresponding updates bocks in physical address space for that bank.
FIG. 20 illustrates a second flush operation in the DLBA space of the bank of FIG. 19.
FIG. 21 is a flow diagram of a pink block selection process for a flush operation.
FIG. 22 illustrates a storage address table (SAT) hierarchy in an arrangement where host logical addresses are re-mapped to a second logical address space.
FIG. 23 illustrates a storage address table (SAT) write block used in tracking logical to logical mapping.
FIG. 24 is an LBA entry for use in a SAT page of the SAT table of FIG. 23.
FIG. 25 is a DLBA entry for use in a SAT page of the SAT table of FIG. 23.
FIG. 26 is an SAT index entry for use in a SAT page of the SAT table of FIG. 23.
FIG. 27 illustrates a storage address table translation procedure for use in the storage address re-mapping implementations of FIGS. 11 and 12.
FIG. 28 illustrates a state diagram of SAT block transitions.
FIG. 29 is a flow diagram of a process for determining SAT block flush order.
FIG. 30 illustrates a block information table (BIT) write block.
FIG. 31 illustrates a DLBA run distribution in a megablock.
FIG. 32 illustrates an embodiment of the SAT where a complete megablock of logical addresses is mapped to DLBA runs.
FIG. 33 illustrates an example of an address format for an LBA address.

### DETAILED DESCRIPTION

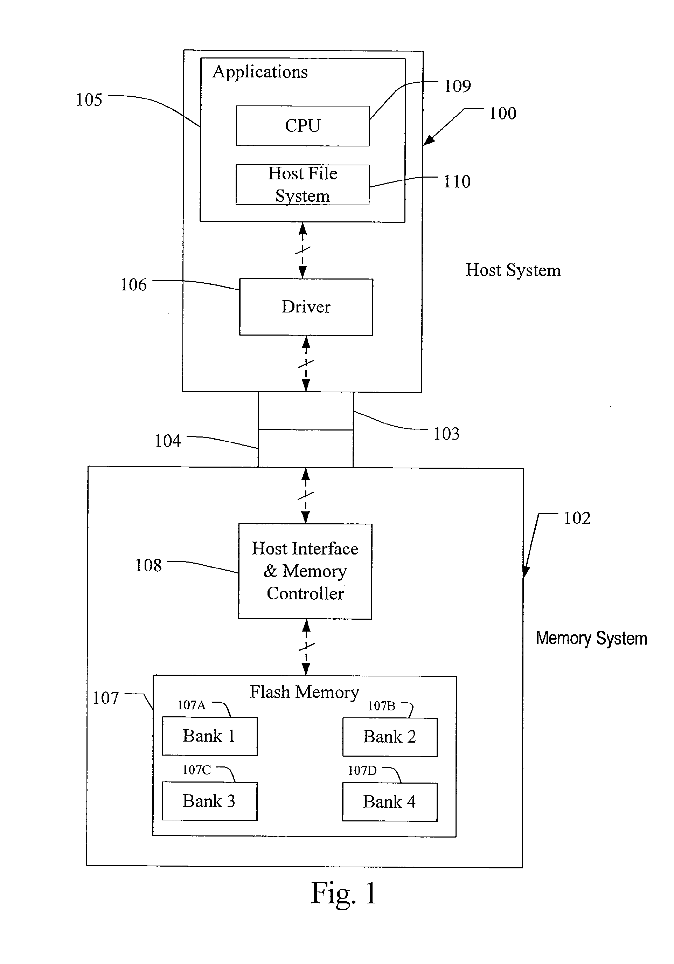

A flash memory system suitable for use in implementing aspects of the invention is shown in FIGS. 1-7. A host system 100 of FIG. 1 stores data into and retrieves data from a memory system 102. The memory system may be flash memory embedded within the host, such as in the form of a solid state disk (SSD) drive installed in a personal computer. Alternatively, the memory system 102 may be in the form of a card that is removably connected to the host through mating parts 103 and 104 of a mechanical and electrical connector as illustrated in FIG. 1. A flash memory configured for use as an internal or embedded SSD drive may look similar to the schematic of FIG. 1, with the primary difference being the location of the memory system 102 internal to the host. SSD drives may be in the form of discrete modules that are drop-in replacements for rotating magnetic disk drives.

One example of a commercially available SSD drive is a 32 gigabyte SSD produced by SanDisk Corporation. Examples of commercially available removable flash memory cards include the CompactFlash (CF), the MultiMediaCard (MMC), Secure Digital (SD), miniSD, Memory Stick, SmartMedia and TransFlash cards. Although each of these cards has a unique mechanical and/or electrical interface according to its standardized specifications, the flash memory system included in each is similar. These cards are all available from SanDisk Corporation, assignee of the present application. SanDisk also provides a line of flash drives under its Cruzer trademark, which are hand held memory systems in small packages that have a Universal Serial Bus (USB) plug for connecting with a host by plugging into the host's USB receptacle. Each of these memory cards and flash drives includes controllers that interface with the host and control operation of the flash memory within them.

Host systems that may use SSDs, memory cards and flash drives are many and varied. They include personal computers (PCs), such as desktop or laptop and other portable computers, cellular telephones, personal digital assistants (PDAs), digital still cameras, digital movie cameras and portable audio players. For portable memory card applications, a host may include a built-in receptacle for one or more types of memory cards or flash drives, or a host may require adapters into which a memory card is plugged. The memory system usually contains its own memory controller and drivers but there are also some memory-only systems that are instead controlled by software executed by the host to which the memory is connected. In some memory systems containing the controller, especially those embedded within a host, the memory, controller and drivers are often formed on a single integrated circuit chip.

The host system 100 of FIG. 1 may be viewed as having two major parts, insofar as the memory 102 is concerned, made up of a combination of circuitry and software. They are an applications portion 105 and a driver portion 106 that interfaces with the memory 102. In a PC, for example, the applications portion 105 can include a processor 109 running word processing, graphics, control or other popular application software, as well as the file system 110 for managing data on the host 100. In a camera, cellular telephone or other host system that is primarily dedicated to performing a single set of functions, the applications portion 105 includes the software that operates the camera to take and store pictures, the cellular telephone to make and receive calls, and the like.

The memory system 102 of FIG. 1 may include non-volatile memory, such as a multi-bank flash memory 107, and a controller circuit 108 that both interfaces with the host 100 to which the memory system 102 is connected for passing data back and forth and controls the memory 107. The controller 108 may convert between logical addresses of data used by the host 100 and physical addresses of the multi-bank flash memory 107 during data programming and reading. The multi-bank flash memory 107 may include any number of memory banks and four memory banks 107A-107D are shown here simply by way of illustration.

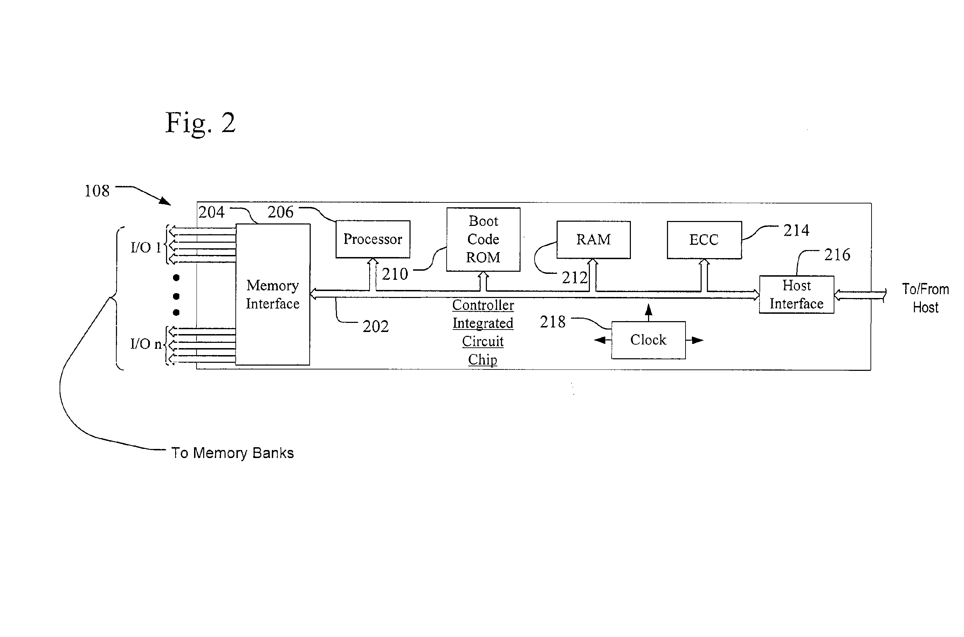

Referring to FIG. 2, the system controller 108 and may be implemented on a single integrated circuit chip, such as an application specific integrated circuit (ASIC). The processor 206 of the controller 108 may be configured as a multi-thread processor capable of communicating separately with each of the respective memory banks 107A-107D via a memory interface 204 having I/O ports for each of the respective banks 107A-107D in the multi-bank flash memory 107. The controller 108 may include an internal clock 218. The processor 206 communicates with an error correction code (ECC) module 214, a RAM buffer 212, a host interface 216, and boot code ROM 210 via an internal data bus 202.

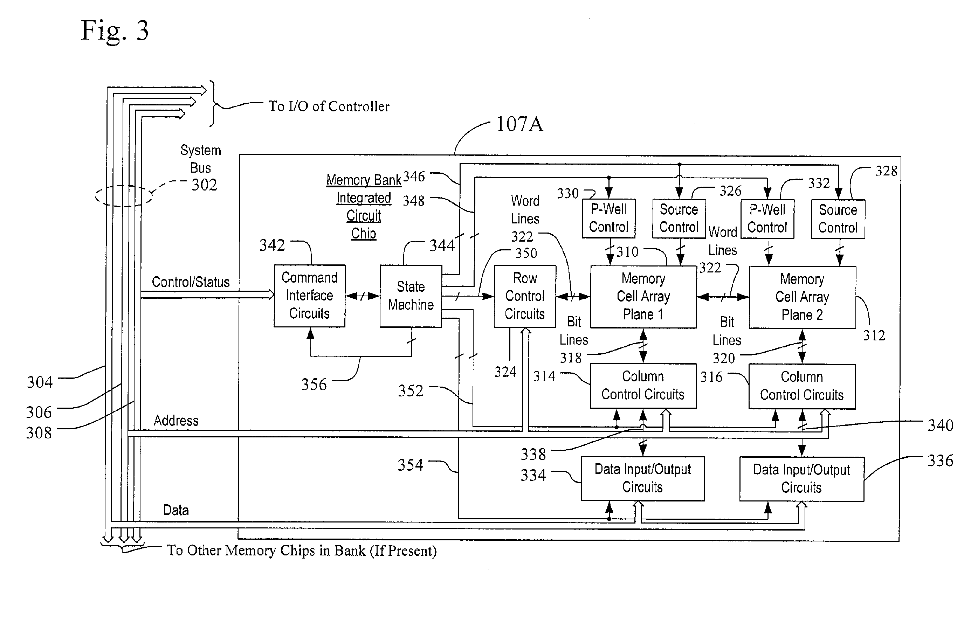

Referring to the single bank 107A illustration in FIG. 3, each bank in the multi-bank flash memory 107 may consist of one or more integrated circuit chips, where each chip may contain an array of memory cells organized into multiple sub-arrays or planes. Two such planes 310 and 312 are illustrated for simplicity but more, such as four or eight such planes, may instead be used. Alternatively, the memory cell array of a memory bank may not be divided into planes. When so divided, however, each plane has its own column control circuits 314 and 316 that are operable independently of each other. The circuits 314 and 316 receive addresses of their respective memory cell array from the address portion 306 of the system bus 302, and decode them to address a specific one or more of respective bit lines 318 and 320. The word lines 322 are addressed through row control circuits 324 in response to addresses received on the address bus 19. Source voltage control circuits 326 and 328 are also connected with the respective planes, as are p-well voltage control circuits 330 and 332. If the bank 107A is in the form of a memory chip with a single array of memory cells, and if two or more such chips exist in the system, the array of each chip may be operated similarly to a plane or sub-array within the multi-plane chip described above. Each bank 107A-107D is configured to allow functions to be independently controlled by the controller 108 in simultaneous or asynchronous fashion. For example, a first bank may be instructed to write data while a second bank is reading data.

Data are transferred into and out of the planes 310 and 312 through respective data input/output circuits 334 and 336 that are connected with the data portion 304 of the system bus 302. The circuits 334 and 336 provide for both programming data into the memory cells and for reading data from the memory cells of their respective planes, through lines 338 and 340 connected to the planes through respective column control circuits 314 and 316.

Although the processor 206 in the controller 108 controls the operation of the memory chips in each bank 107A-107D to program data, read data, erase and attend to various housekeeping matters, each memory chip also contains some controlling circuitry that executes commands from the controller 108 to perform such functions. Interface circuits 342 are connected to the control and status portion 308 of the system bus 302. Commands from the controller 108 are provided to a state machine 344 that then provides specific control of other circuits in order to execute these commands. Control lines 346-354 connect the state machine 344 with these other circuits as shown in FIG. 3. Status information from the state machine 344 is communicated over lines 356 to the interface 342 for transmission to the controller 108 over the bus portion 308.

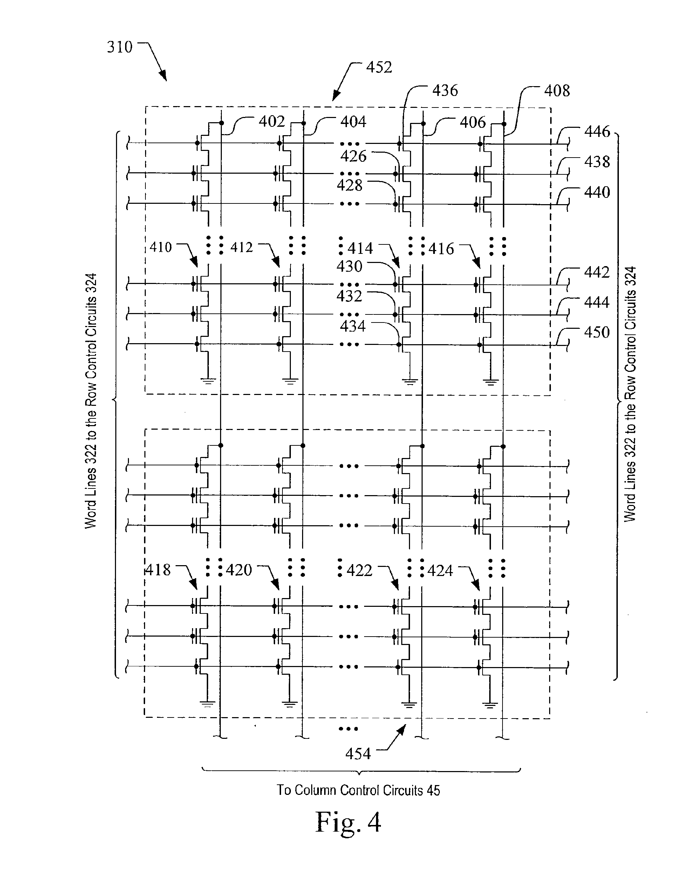

A NAND architecture of the memory cell arrays 310 and 312 is discussed below, although other architectures, such as NOR, can be used instead. Examples of NAND flash memories and their operation as part of a memory system may be had by reference to U.S. Pat. Nos. 5,570,315, 5,774,397, 6,046,935, 6,373,746, 6,456,528, 6,522,580, 6,771,536 and 6,781,877 and United States patent application publication no. 2003/0147278. An example NAND array is illustrated by the circuit diagram of FIG. 4, which is a portion of the memory cell array 310 of the memory system of FIG. 3. A large number of global bit lines are provided, only four such lines 402-408 being shown in FIG. 4 for simplicity of explanation. A number of series connected memory cell strings 410-424 are connected between one of these bit lines and a reference potential. Using the memory cell string 414 as representative, a plurality of charge storage memory cells 426-432 are connected in series with select transistors 434 and 436 at either end of the string. When the select transistors of a string are rendered conductive, the string is connected between its bit line and the reference potential. One memory cell within that string is then programmed or read at a time.

Word lines 438-444 of FIG. 4 individually extend across the charge storage element of one memory cell in each of a number of strings of memory cells, and gates 446 and 450 control the states of the select transistors at each end of the strings. The memory cell strings that share common word and control gate lines 438-450 are made to form a block 452 of memory cells that are erased together. This block of cells contains the minimum number of cells that are physically erasable at one time. One row of memory cells, those along one of the word lines 438-444, are programmed at a time. Typically, the rows of a NAND array are programmed in a prescribed order, in this case beginning with the row along the word line 444 closest to the end of the strings connected to ground or another common potential. The row of memory cells along the word line 442 is programmed next, and so on, throughout the block 452. The row along the word line 438 is programmed last.

A second block 454 is similar, its strings of memory cells being connected to the same global bit lines as the strings in the first block 452 but having a different set of word and control gate lines. The word and control gate lines are driven to their proper operating voltages by the row control circuits 324. If there is more than one plane or sub-array in the system, such as planes 1 and 2 of FIG. 3, one memory architecture uses common word lines extending between them. There can alternatively be more than two planes or sub-arrays that share common word lines. In other memory architectures, the word lines of individual planes or sub-arrays are separately driven.

As described in several of the NAND patents and published application referenced above, the memory system may be operated to store more than two detectable levels of charge in each charge storage element or region, thereby to store more than one bit of data in each. The charge storage elements of the memory cells are most commonly conductive floating gates but may alternatively be non-conductive dielectric charge trapping material, as described in U.S. patent application publication no. 2003/0109093.

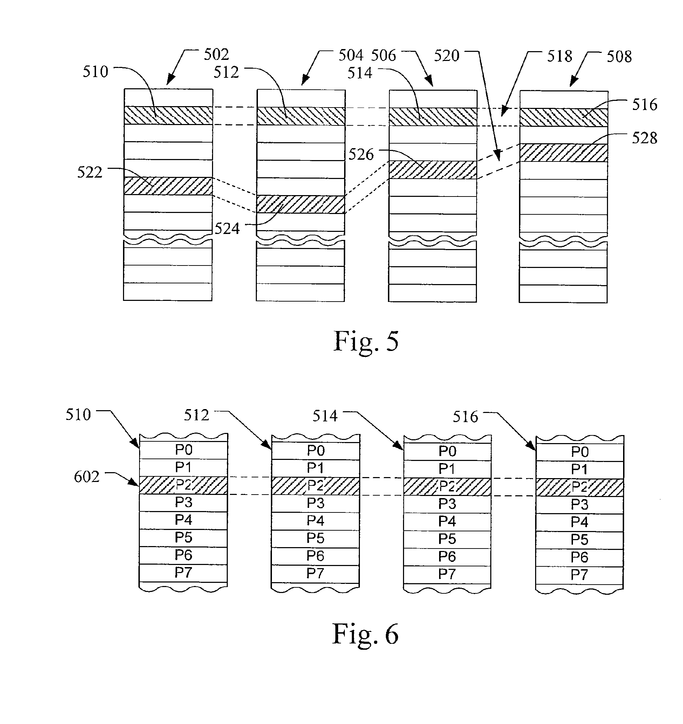

FIG. 5 conceptually illustrates an organization of one bank 107A of the multi-bank flash memory 107 (FIG. 1) that is used as an example in further descriptions below. Four planes or sub-arrays 502-508 of memory cells may be on a single integrated memory cell chip, on two chips (two of the planes on each chip) or on four separate chips. The specific arrangement is not important to the discussion below. Of course, other numbers of planes, such as 1, 2, 8, 16 or more may exist in a system. The planes are individually divided into blocks of memory cells shown in FIG. 5 by rectangles, such as blocks 510, 512, 514 and 516, located in respective planes 502-508. There can be dozens or hundreds of blocks in each plane.

As mentioned above, the block of memory cells is the unit of erase, the smallest number of memory cells that are physically erasable together. For increased parallelism, however, the blocks are operated in larger metablock units. One block from each plane is logically linked together to form a metablock. The four blocks 510-516 are shown to form one metablock 518. All of the cells within a metablock are typically erased together. The blocks used to form a metablock need not be restricted to the same relative locations within their respective planes, as is shown in a second metablock 520 made up of blocks 522-528. Although it is usually preferable to extend the metablocks across all of the planes, for high system performance, the memory system can be operated with the ability to dynamically form metablocks of any or all of one, two or three blocks in different planes. This allows the size of the metablock to be more closely matched with the amount of data available for storage in one programming operation.

The individual blocks are in turn divided for operational purposes into pages of memory cells, as illustrated in FIG. 6. The memory cells of each of the blocks 510-516, for example, are each divided into eight pages P0-P7. Alternatively, there may be 16, 32 or more pages of memory cells within each block. The page is the unit of data programming and reading within a block, containing the minimum amount of data that are programmed or read at one time. In the NAND architecture of FIG. 3, a page is formed of memory cells along a word line within a block. However, in order to increase the memory system operational parallelism, such pages within two or more blocks may be logically linked into metapages. A metapage 602 is illustrated in FIG. 6, being formed of one physical page from each of the four blocks 510-516. The metapage 602, for example, includes the page P2 in each of the four blocks but the pages of a metapage need not necessarily have the same relative position within each of the blocks. Within a bank, a metapage is the maximum unit of programming.

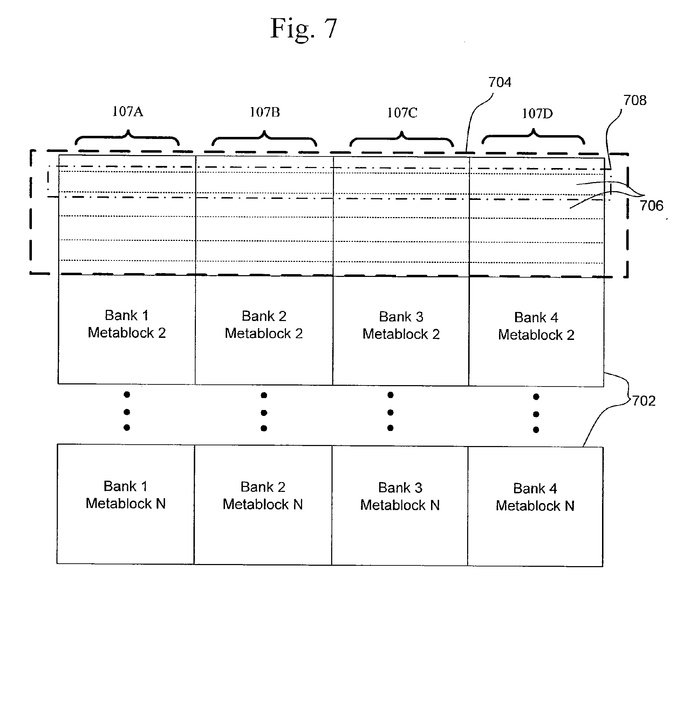

As noted above, FIGS. 5-6 illustrate one embodiment of the memory cell arrangement that may exist in one memory bank 107A of the multi-bank memory 107. In one embodiment, regardless of individual memory cell configuration for each bank 107A-107D , the memory system 102 is preferably configured to have a maximum unit of programming of a megablock, wherein a megablock spans at least one block of each bank in the multi-bank memory, if the memory bank is arranged in a single plane configuration, or a metablock of each bank in the multi-bank flash memory 107, if the memory bank is arranged in a multiple plane configuration. In the following discussion, it is assumed for clarity of description that each bank is arranged in columns of metablocks. Referring to FIG. 7, each column shown represents a bank 107A-107D of metablocks 702, such as the metablocks 518, 520 discussed above. A megablock 704 contains at least one metablock 702 in each bank 107A-107D , each metablock 702 divided into a plurality of metapages 706. Although the megablock 704 identified in FIG. 7 shows metablocks 702 in the same relative physical location in each bank 107A-107D , the metablocks 702 used to form a megablock 704 need not be restricted to the same relative physical locations. Also, as referred to herein, a megapage 708 refers to a metapage 706 from each of the metablocks 702 in a megablock 704. The memory banks 107A-107D may each be arranged in a similar manner or have different memory cell arrangements from one another. For example, the banks could use different types of memory technology, such as having a first bank of binary (single layer cell or SLC) flash and another bank of multi-layer cell (MLC) flash. In yet other embodiments, a first bank may be fabricated as rewritable non-volatile flash and the remaining banks may use standard flash (e.g., binary or multi-layer cell flash so that an attribute of a megapage may be updated without moving data as would be necessary need to in regular bank block.

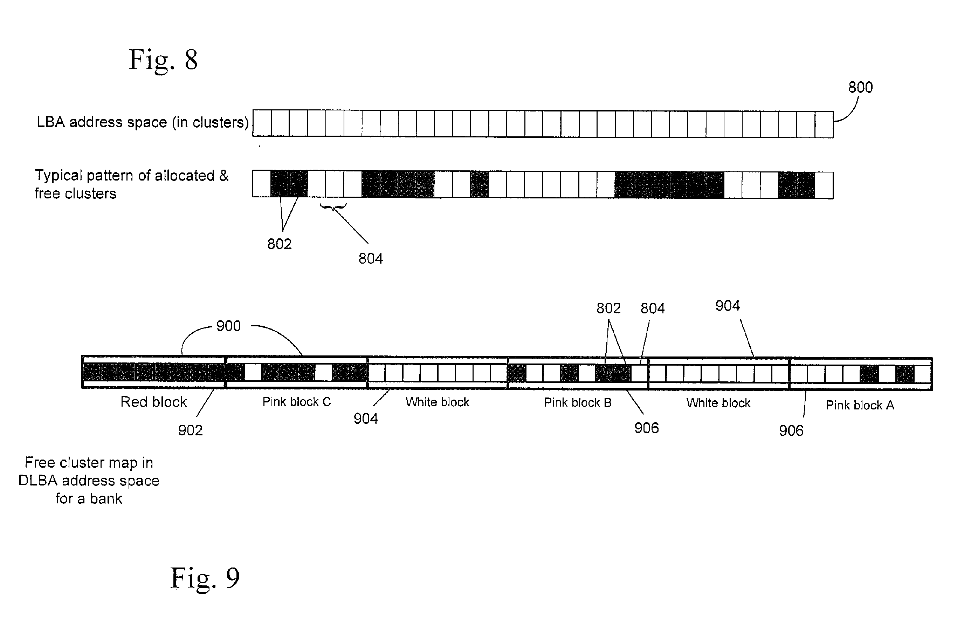

Referring now to FIG. 8, a common logical interface between the host 100 and the memory system 102 utilizes a continuous logical address space 800 large enough to provide addresses for all the data that may be stored in the memory system 102. Referring to the host 100 and memory system 102 described above, data destined for storage in the multi-bank flash memory 107 is typically received in a host logical block address (LBA) format. This host address space 800 is typically divided into increments of clusters of data. Each cluster may be designed in a given host system to contain a number of sectors of data, somewhere between 4 and 64 sectors being typical. A standard sector contains 512 bytes of data. Referring to FIG. 8, a typical pattern of allocated clusters (shaded) 802 and free clusters (unshaded) 804 in logical address space 800 for a NTFS file system is shown.

An organizational structure for addressing the fragmentation of logical address space 800 seen in FIG. 8 is shown in FIG. 9. The systems and methods for storage address re-mapping described herein allocate LBA addresses in terms of metablocks of clusters 900, referred to generally as "blocks" in the discussion below. In the following description, blocks 900 completely filled with valid data are referred to as red blocks 902, while blocks with no valid data, and thus containing only unwritten capacity, are referred to as white blocks 904. The unwritten capacity in a white block 904 may be in the erased state if the memory system 102 employs an "erase after use" type of procedure. Alternatively, the unwritten capacity in the white block 904 may consist of obsolete data that will need to be erased upon allocation if the memory system 102 employs an "erase before use" type of procedure. Blocks that have been fully programmed and have both valid 802 and invalid (also referred to as obsolete) 804 clusters of data are referred to as pink blocks 906. As discussed in greater detail herein, a megablock 704, which is made up of at least one white block 904 in each bank 107A-107D, is allocated to receive data from the host and is referred to as a write megablock.

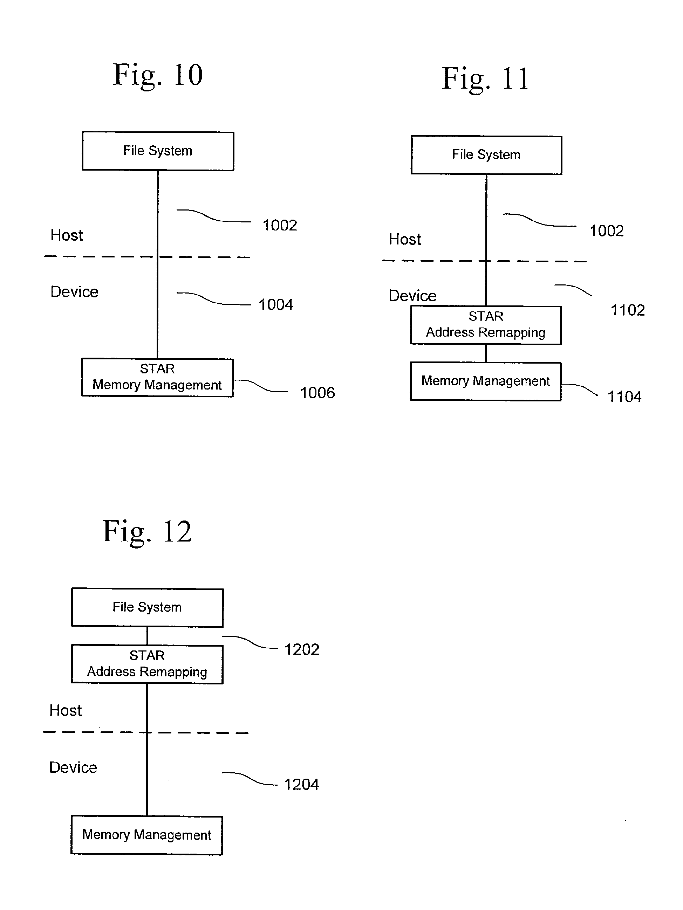

The implementation of the multi-bank write algorithm and flushing techniques described below may vary depending on the arrangement of the host 100 and the memory system 102. FIGS. 10-12 illustrate several arrangements of functionality of the re-mapping functionality between host and memory system. The arrangements of FIGS 10-11 represent embodiments where the storage address re-mapping (STAR) functionality is contained totally within the memory system 1004, 1102. In these first two arrangements, the memory system 1004, 1102 may operate with a legacy host 1002 with no modifications required on the host 1002. Conversely, the arrangement illustrated in FIG. 12 is of an embodiment where the storage address re-mapping functionality is contained totally within the host 1202. In this latter embodiment, the host 1202 may operate with a legacy storage device 1204 that needs no modification. In addition to the varied implementation in each arrangement of FIGS. 10-12 of the STAR write functionality, the flush operation, described in greater detail below, will vary. An example of a flash block management scheme for writing and flushing in a single bank memory is set forth in copending U.S. Application Serial No. 12/036,014, filed February 22, 2008.

In the example of FIG. 10, the storage address mapping algorithm may be integrated in the memory management 1006 of each bank of the storage device 1004, where the LBA addresses from the host 1002 are directly mapped to physical blocks in the multi-bank flash memory such that a first megablock of physical memory is completely filled with data before proceeding to a next megablock. Alternatively, in FIG. 11, a storage address re-mapping mechanism may be implemented in an application on the storage device 1102, but separate from the memory manager 1104 for each bank of the device 1102. In the implementation of FIG. 11, each logical address from the host 1002 would be re-mapped to a second logical address, referred to herein as a storage logical block address (storage LBA), also referred to herein as a device logical block address (DLBA), utilizing the technique of writing data from the host in terms of complete megablocks, and then the memory manager 1104 would translate the data organized under the DLBA arrangement to blocks of physical memory for each respective bank. The DLBA address space is structured in DLBA blocks of uniform size, equal to that of a physical metablock.

The implementation of FIG. 12 would move the functionality of storage address re-mapping from the storage device 1204 to an application on the host 1202. In this implementation, the function of mapping LBA addresses to DLBA addresses would be similar to that of FIG. 11, with the primary difference being that the translation would occur on the host 1202 and not in the memory device 1204. The host 1202 would then transmit both the DLBA address information generated at the host, along with the data associated with the DLBA addresses, to the memory device 1204. In order to divide and manage the logical address space 800 in terms of blocks of logical addresses for the implementation of FIG. 12, the host and memory system may need to exchange information on the block size of physical blocks in flash memory. The size of a logical block is preferably the same size as the physical block and this information may be communicated when a memory system is connected with a host. This communication may be set up to occur as a hand-shaking operation upon power-up or upon connection of a memory system to the host. In one embodiment, the host may send an "Identify Drive" query to the memory system requesting block size and alignment information, where block size is the size of the individual physical blocks for the particular memory system and the alignment information is what, if any, offset from the beginning of a physical block needs to be taken into account for system data that may already be taking up some of each physical block.

The Identify Drive command may be implemented as reserved codes in a legacy LBA interface command set. The commands may be transmitted from the host to the memory system via reserved or unallocated command codes in a standard communication interface. Examples of suitable interfaces include the ATA interface, for solid state disks, or ATA-related interfaces, for example those used in CF or SD memory cards. If the memory system fails to provide both the block size and offset information, the host may assume a default block size and offset. If the memory system responds to the Identify Drive command with only block size information, but not with offset information, the host may assume a default offset. The default block size may be any of a number of standard block sizes, and is preferably set to be larger than the likely actual physical block size. The default offset may be set to zero offset such that it is assumed each physical block can receive data from a host starting at the first address in the physical block. If the host is coupled to a predetermined internal drive, such as an SSD, there may be no need to perform this step of determining block size and offset because the capabilities of the memory device may already be known and pre-programmed. Because even an internal drive may be replaced, however, the host can be configured to always verify memory device capability. For removable memory systems, the host may always inquire of the block size and offset through an Identify Drive command or similar mechanism.

### Multi-Bank Megablock Write Algorithm

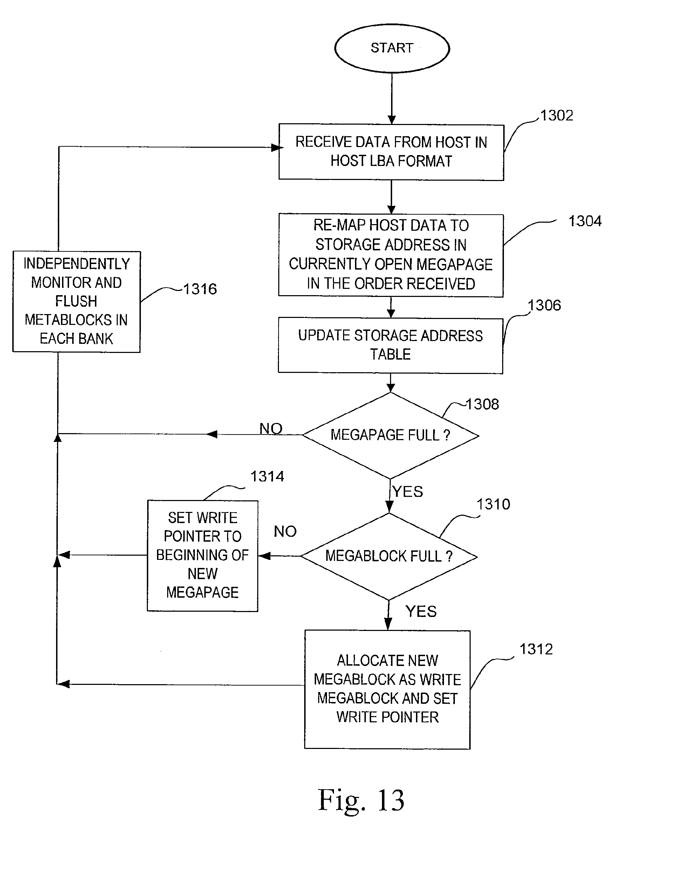

In accordance with one embodiment, as illustrated in FIG. 13, a method of managing a host data write operation in a multi-bank memory includes receiving host data from a host file system 10 in the host LBA format described above with respect to FIG. 8 (at 1302). As the host data is received, the data is re-mapped to a storage address by writing the host data to the currently open megapage in the currently open write megablock in the order it is received regardless of host LBA order (at 1304). As discussed in greater detail below, a storage address table (SAT) is updated as the host data is written to megablocks in the multi-bank memory 107 to track the mapping of the original host LBA addresses to the current addresses in the multi-bank memory 107 (at 1306). Each megapage 708 is fully written before writing to the next megapage and a new megablock 704 is preferably only allocated to receive additional host data only after the current write megablock is fully written (at 1308, 1310 and 1312). If a next megapage 708 is available in the current megablock 704, a write pointer is set to the beginning of that next megapage 708 (at 1314) and host data continues to be re-mapped to contiguous storage addresses in each metapage of the megapage, bank-by-bank, in the order received. While the host data write algorithm is being carried out on a megablock level to the multi-bank memory system 107 as a whole in megapage order, a flushing algorithm is independently applied to each of the banks 107A-107D in the memory system 102 (at 1316). The flushing algorithm, as explained in detail below, creates within each bank new white blocks with which to use in new megablocks, for host data writes, or for other storage needs. Although a single write megablock is discussed above, multiple write megablocks may be implemented if the banks 107A-107D are partitioned appropriately.

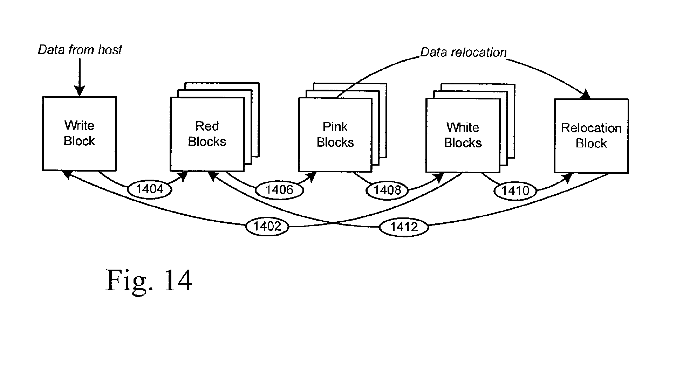

A flow of data and the pattern of block state changes within each bank 107A-107D according to one implementation of the storage address re-mapping algorithm are shown in FIG. 14. When the last page in the current write block is filled with valid data, the current write block becomes a red block (at step 1404) and a new write block is allocated from a white block list (at step 1404) to be part of the next megablock 704. It should be noted that a current write block may also make a direct transition to a pink block when completely programmed if some pages within the current write block became obsolete before the current write block was fully programmed. This transition is not shown, for clarity; however it could be represented by an arrow from the write block to a pink block.

Referring again to the specific example of data flow in FIG. 14, when one or more pages within a red block are later made obsolete by deletion of an LBA run, the red block becomes a pink block (at step 1406). When the storage address re-mapping algorithm detects a need for more white blocks in the bank, the algorithm initiates a flush operation within the bank, independently of any other flush algorithm that may be active in another bank, to move the valid data from a pink block so that the pink block becomes a white block (at step 1408). In order to flush a pink block, the valid data of a pink block is sequentially relocated in an order of occurrence to a white block that has been designated as a relocation block (at step 1410). Once the relocation block is filled, it becomes a red block (at step 1412). As noted above with reference to the write block, a relocation block may also make the direct transition to a pink block if some pages within it have already become obsolete by the time it is fully programmed. This transition is not shown, for clarity, but could be represented by an arrow from the relocation block to a pink block in FIG. 14.

As noted above, when writing host data to the memory system 102, the multi-bank write algorithm of FIG. 13 allocates address space in terms of megablocks and fills up an entire megablock in megapage order. Accordingly, because FIG. 14 is illustrative of a single bank, it should be understood that the data from the host is received at a write block in any given bank until a metapage in the write block of that bank is filled and then, although more metapages may be available in the write block in the bank, the next metapage amount of host data will be written to the next metapage in the megapage, i.e. in the write block of the next bank in the multi-bank flash memory 107. Thus, a given write block residing in one bank of the memory will receive a pattern of a metapage of host data for every N metapages of host data that the host provides, where N is the number of banks in the multi-bank flash memory 107. In contrast to this coordinated host data write sequence, information generated within the memory system 102, such as the SAT mentioned above, or valid data from pink blocks that is relocated as part of a flush operation to make new white blocks in a bank, is completely written to respective individual write blocks in the bank.

### Multi-Bank Flush Operations

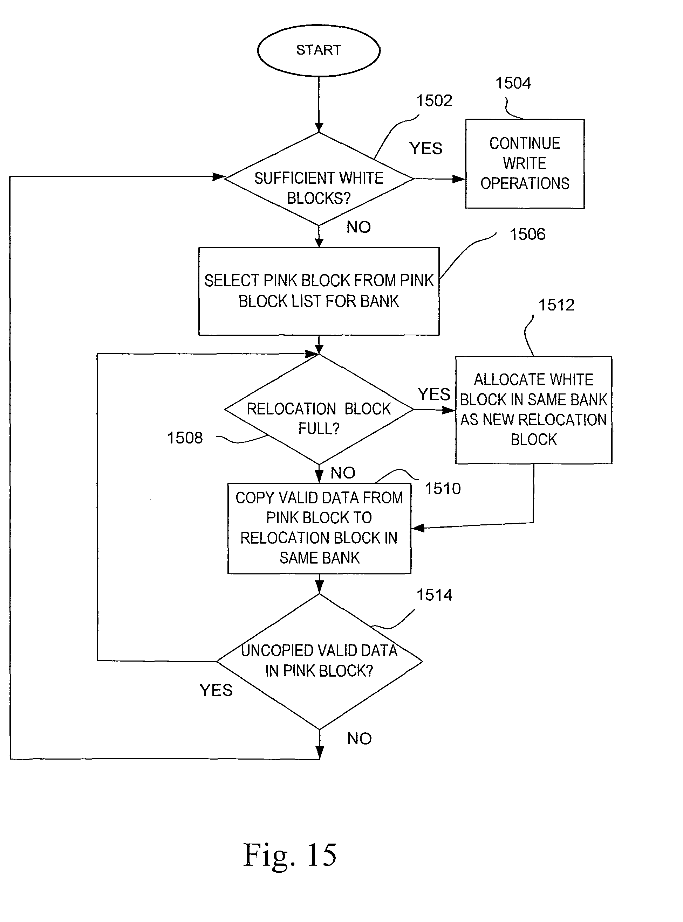

An embodiment of the storage address re-mapping algorithm manages the creation of white blocks 904 by relocating, also referred to herein as flushing, valid data from a pink block 906 to a special write pointer known as the relocation pointer. If the storage address space is subdivided by range or file size as noted above, each range of storage addresses may have its own relocation block and associated relocation pointer. Referring to FIG. 15, an embodiment of the flush operations for the multi-bank flash memory include, separately and independently for each bank 107A-107D, tracking whether there is a sufficient number of white blocks (at 1502). This determination may be made based on a total number of white blocks that currently exist in the bank or may be based on a rate at which white blocks are being consumed in the bank. If there are a sufficient number of white blocks, then no flushing operation is needed and the bank may wait for the next write operation (at 1504). If it is determined that there is an insufficient number of white blocks, then a pink block in the bank is selected (at 1506) from a pink block list maintained for the bank as described below. If the current relocation block in the bank is not full, valid data is copied from the selected pink block in an order of occurrence in the pink block to contiguous locations in the relocation block (at 1508, 1510). In one embodiment, only when the relocation block is fully programmed is another white block from the same bank allocated as the next relocation block (at 1512). Also, in one embodiment, only valid data from the selected pink block is copied into a relocation block while that pink block still contains any uncopied valid data (at 1514). The flush operation illustrated in FIG. 15 reflects that, in the multi-bank flash memory 107, a flush operation is independently executed, and completely contained, within each respective bank 107A-107D such that valid data in a pink block 906 in a particular bank is only flushed into a relocation block within the same bank. Flush operations are normally performed as background operations, to transform pink blocks into white blocks.

A pink block 906 is selected for a flush operation according to its characteristics. In one embodiment, lists of pink blocks are independently maintained for each bank 107A-107D in the multi-bank flash memory 107. Referring again to FIG. 9, in one implementation a pink block with the least amount of valid data (i.e. the fewest shaded clusters in FIG. 9) would be selected because fewer addresses with valid data results in less data needing relocation when that particular pink block is flushed. Thus, in the example of FIG. 9, pink block B would be selected in preference to pink block A because pink block B has fewer addresses with valid data. In other implementations, the pink block selected for a flush operation may be any one of a group of pink blocks that are associated with less than some threshold amount of valid data. The threshold may be less than the average amount of valid data contained in the total set of pink blocks. A subset of the pink blocks at or below the threshold amount of valid data may be maintained in a list from which the host or memory system may select pink blocks. For example, a dynamic list of a defined number (e.g. sixteen) or percentage (e.g. 30 percent) of pink blocks currently satisfying the threshold requirement may be maintained and any pink block may be selected from that list for flushing without regard to whether the selected pink block in that list has the absolute least amount of valid data. The number or percentage of pink blocks that form the list in each bank that the memory system or host will select from may be a fixed value or a user selectable value. The list may include the group of pink blocks representing, in ranked order, the pink blocks with the absolute least amount of valid data from the available pink blocks or may simply include pink blocks that fall within the threshold requirement.

Alternatively, or in combination, selection of pink blocks may also be made based on a calculated probability of accumulating additional obsolete data in a particular pink block 906. The probability of further obsolete data being accumulated in pink blocks 906 could be based on an assumption that data that has survived the longest in the memory is least likely to be deleted. Thus, pink blocks 906 that were relocation blocks would contain older surviving data than pink blocks 906 that were write blocks having new host data. The selection process of pink blocks 906 for flushing would then first target the pink blocks 906 that were recently relocation blocks because they would be less likely to have further data deleted, and thus fewer additional obsolete data could be expected. The pink blocks 906 that were formerly write blocks would be selected for flushing later based on the assumption that newer data is more likely to be deleted, thus creating more obsolete data.

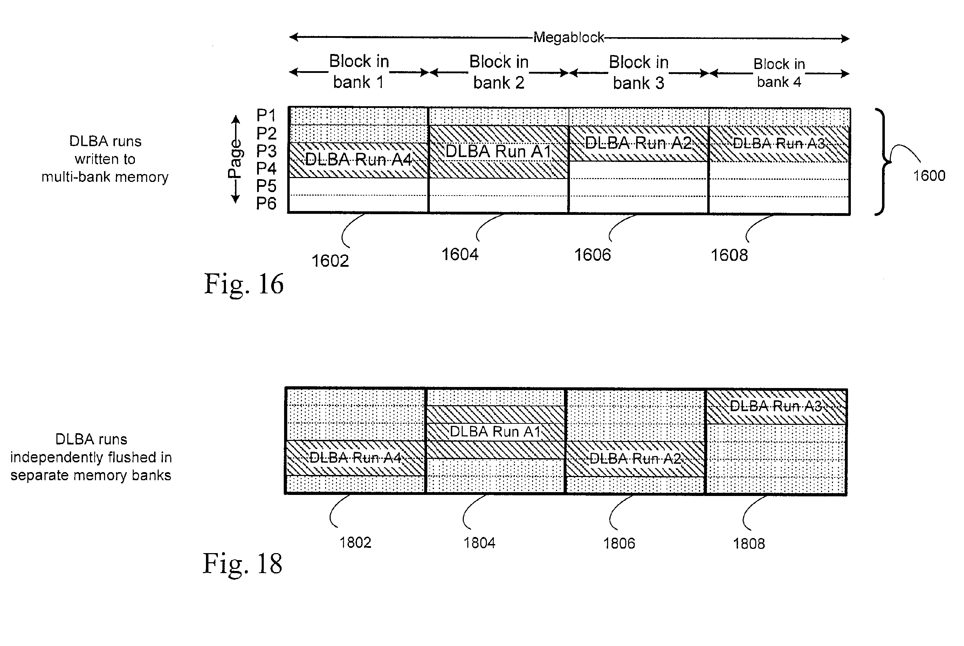

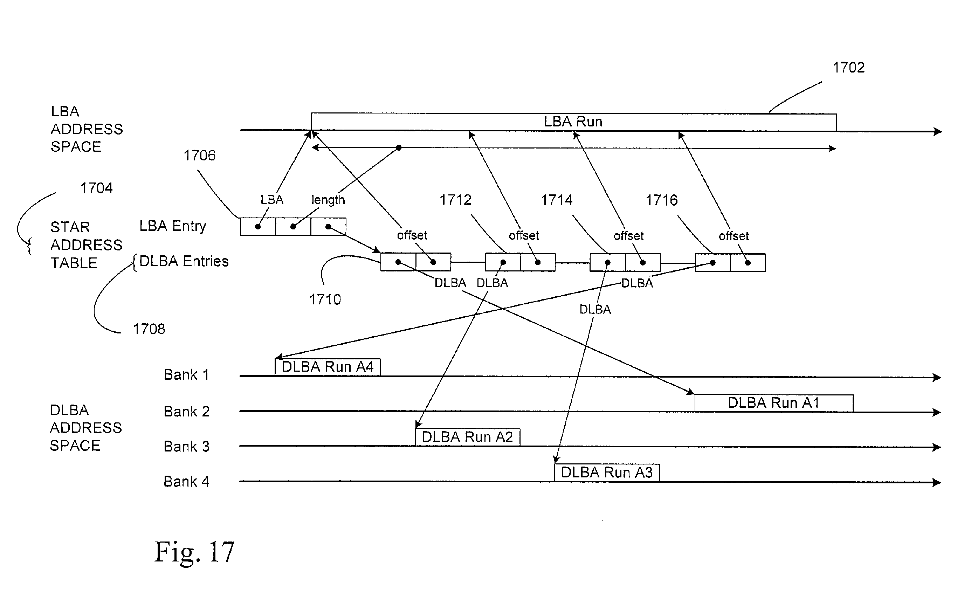

A more specific example of the megablock write process is illustrated in FIGS. 16 -17. In this example, it is assumed that the system configuration of FIG. 11 is being used, where the host LBA addresses are translated to an intermediate storage LBA address, also referred to as a DLBA address, in an application run by the controller 108 in the memory system 102. As shown in FIG. 16, the open write megablock 1600 in a four bank memory with metablocks 1602 each having six metapages (P1-P6) is associated with the LBA addresses for the LBA run 1702 shown in FIG. 17. The order of writing to the multi-bank memory 107 begins with the first open metapage (P2 in bank 2) and continues sequentially from left to right along the remainder of the megapage (P2 in bank 3 followed by P2 in bank 4). The controller routes the LBA addresses to the respective metapages in the megapage so that the incoming LBA addresses of the LBA run 1702 are re-mapped in the order they are received to contiguous DLBA addresses associated with each metapage and the entire metapage is programmed before moving to the next metapage. The LBA run 1702 continues to be re-mapped to DLBA addresses associated with the next megapage (in succession, metapage P3 in each of banks 1-4). The last portion of the LBA run 1702 is then contiguously re-mapped to DLBA addresses associated with metapage P4 in bank 1 and bank 2.

Although the write algorithm managed by the controller 108 sequentially writes to the megablock 1600 by distributing a megapage worth of LBA addressed host data across each of the banks in sequence before proceeding to the next megapage in the megablock 1600, the collection of discontinuous LBA addresses in each bank for the single run 1702 are managed as DLBA runs by each bank which, for this example, are identified as DLBA Runs A1-A4 in FIGS. 16-17. The mapping from LBA address to DLBA address in each bank is tracked in the storage address table (SAT) 1704 for the multi-bank flash memory 107 that is maintained in the memory. The version of the SAT 1704 illustrated in FIG. 17 maps each LBA run containing valid data to the associated DLBA runs. The LBA entry 1706 in the SAT 1704 includes the first LBA address in the run, the length of the run and the DLBA address and bank identifier of the first DLBA run (DLBA Run A1) mapped to the LBA run 1702. The corresponding DLBA entries 1708 include a first DLBA entry 1710 that has the first DLBA address and bank number of the DLBA run and the LBA address offset in the LBA run 1702 the first DLBA address is mapped to which, in the case of the first DLBA entry 1710 will be zero and in all subsequent DLBA entries for a given LBA run 1702 will be non-zero values.

After the data associated with the LBA run 1702 is re-mapped to DLBA addresses and written to the physical address locations in the megablock 1600 associated with the DLBA addresses, one or more subsequent LBA runs will be re-mapped and written to the remaining unwritten capacity (remainder of megapage aligned with P4 in banks 3 and 4, and the megapages aligned with P5 and P6, respectively) in the megablock 1600. After a megablock such as megablock 1600 is fully programmed, the controller no longer tracks the megablock and each block 1602 - 1608 in the megablock 1600 is thereafter managed by an independent flush operation running in their respective banks. Thus, the blocks 1602 - 1608 of the original megablock 1600, as they each become pink blocks due to the accumulation of obsolete data, may be independently flushed to unrelated relocation blocks. FIG. 18 illustrates how the DLBA Runs A1-A4 may be moved to new blocks 1802 - 1808 by virtue of independent flush operations in the respective banks. The survival of the data associated with DLBA Runs A1-A4 of course assumes that this data was valid data and other data in the blocks 1600 was obsolete and triggered the respective flush operations. Also, although the blocks 1802 - 1808 are shown adjacent one another in FIG. 18 for ease of reference and to illustrate the possible movement of the DLBA Runs A1-A4 with respect to their original relative page alignment in the megablock of FIG. 16 after respective flushing operations, the blocks 1802 - 1808 will likely be located in different physical or relative locations in each bank.

Referring to the implementations of storage address re-mapping illustrated in FIGS. 11 and 12, where a logical-to-logical, LBA to DLBA, translation is executed by an application run by the controller 108 on the memory system or run by the processor 109 on the host 100, an example of address manipulation according to the state diagram of FIG. 14 is now discussed with reference to FIGS. 8-9 and 19-20. Assuming that a system has been operating according to the storage address re-mapping algorithm represented by FIG. 15, in the LBA address space (FIG. 8), free clusters 804 are dispersed at essentially random locations. In the DLBA address space for a given bank (FIG. 9), two white blocks 904 are available and there are three pink blocks 906 having differing numbers of obsolete (free) clusters 804.

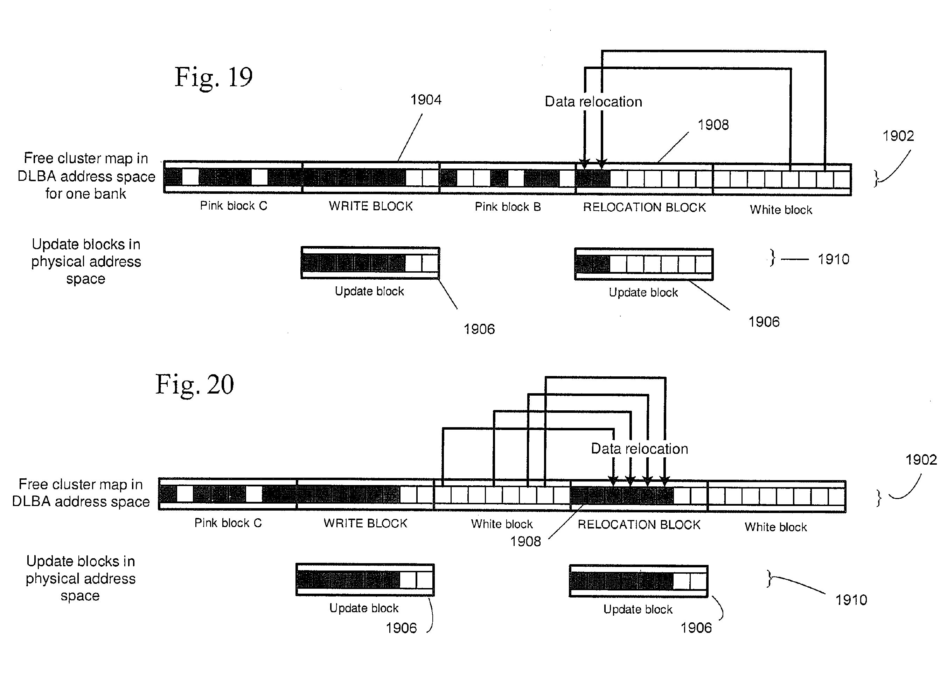

When the host next has data to write to the storage device, it allocates LBA address space wherever it is available. FIG. 19 indicates how the storage address re-mapping algorithm allocates one of the available white blocks, such as white block 904 of FIG. 9, to be a write block 1904 that is part of a larger megablock, and how each LBA address is mapped to a sequential cluster in the DLBA space available in the write block 1904. The write block 1904 in DLBA space is written to according to the megablock write pattern discussed above in the order the LBA addresses are written, regardless of the LBA address position. The storage address re-mapping algorithm as applied to the bank would assign DLBA addresses in the write block 1904 in the time order LBA addresses are received, regardless of the LBA address number order. Data is written in a write block in one or more DLBA runs. A DLBA run is a set of contiguous DLBA addresses that are mapped to contiguous LBA addresses in the same LBA run. A DLBA run must be terminated at a block boundary (which is the bank boundary) in DLBA address space 1902. When a write block 1904 becomes filled, a white block 904 is allocated as the next write block 1904.

In each bank, DLBA blocks are aligned with blocks 1906 in physical address space of the flash memory 107, and so the DLBA block size and physical address block size are the same. The arrangement of addresses in the DLBA write block 1904 are also then the same as the arrangement of the corresponding update block 1906 in physical address space. Due to this correspondence, no separate data consolidation, commonly referred to as garbage collection, is ever needed in the physical update block. In common garbage collection operations, a block of logical addresses is generally always reassembled to maintain a specific range of LBA addresses in the logical block, which is also reflected in the physical block. More specifically, when a memory system utilizing common garbage collection operations receives an updated sector of information corresponding to a sector in particular physical block, the memory system will allocate an update block in physical memory to receive the updated sector or sectors and then consolidate all of the remaining valid data from the original physical block into the remainder of the update block. In this manner, standard garbage collection will perpetuate blocks of data for a specific LBA address range so that data corresponding to the specific address range will always be consolidated into a common physical block. The flush operation discussed herein does not require consolidation of data in the same address range. Instead, the flush operation performs address mapping to create new blocks of data that may be a collection of data from various physical blocks, where a particular LBA address range of the data is not intentionally consolidated.

As mentioned previously, the storage address re-mapping algorithm operates independently in each bank 107A-107D to ensure that sufficient supplies of white blocks are available. The storage address re-mapping algorithm manages the creation of white blocks by flushing data from pink blocks to a special write block known as the relocation block 1908 (FIG. 19). The pink block currently selected for flushing is referred to as the flush block.

Referring now to FIGS. 19-20 in sequence, an illustration of a block flush process for a given bank is shown. The storage address re-mapping algorithm, executed by the controller 108 independently for each bank 107A-107D in the implementation of FIG. 11, designates a white block as the relocation block 1908, to which data is to be flushed from selected pink blocks in the same bank to create additional white blocks. As shown in FIG. 19, valid data, also referred to as red data, in the flush block (pink block A of FIG. 9) is relocated to sequential addresses in the relocation block 1908, to convert the flush block to a white block 904. A corresponding update block 1906 in the physical address space 1910 is also assigned to receive the flushed data. As with the update block 1906 used for new data received from the host, the update block 1906 for receiving flushed data will never require a garbage collection operation to consolidate valid data because the flush operation has already accomplished the consolidation in DLBA address space 1902.

A next flush block (pink block B of FIG. 19) is identified from the remaining pink blocks as illustrated in FIG. 20. The pink block with the least red data is again designated as the flush block and the red data (valid data) of the pink block is transferred to sequential locations in the open relocation block. A parallel assignment of physical addresses in the update block 1906 is also made. Again, no data consolidation is required in the physical update block 1906 mapped to the relocation block 1908. Flush operations on pink blocks are performed as background operations to create white blocks at a rate sufficient to compensate for the consumption of white blocks that are designated as write blocks. The example of FIGS. 8-9 and 19-20 illustrate how a write block and a relocation block may be separately maintained, along with respective separate update blocks in physical address space, for new data from the host and for relocated data from pink blocks. Similar to the process of allocating of a new write block for operating as part of a megablock and associating new data received from a host only when a current megagablock is fully programmed, a new relocation block is preferably only allocated after the prior relocation block has been fully programmed. The new relocation block preferably only contains unwritten capacity, i.e. is only associated with obsolete data ready to erase, or is already erased and contains no valid data, upon allocation.

In the embodiment noted above, new data from a host is associated with write blocks that will only receive other new data from the host and valid data flushed from pink blocks in a flush operation is moved into relocation blocks in a particular bank that will only contain valid data from one or more pink blocks for that bank. As noted above, in other embodiments the selection a pink block for flushing may be made where any pink block from a list of pink blocks associated with an amount of red data that is below a threshold, such as an average amount for the current pink blocks may be chosen or the pink block may be any from pink blocks having a specific ranking (based on the amount of valid data associated with the pink block) out of the available pink blocks.

The flush operation relocates relatively "cold" data from a block from which "hot" data has been made obsolete to a relocation block containing similar relatively cold data. This has the effect of creating separate populations of relatively hot and relatively cold blocks. The block to be flushed is always selected as a hot block containing the least amount of data. Creation of a hot block population reduces the memory stress factor, by reducing the amount of data that need be relocated.

In one embodiment, the pink block selected as the flush block may be the most sparsely populated pink block, that is, the pink block containing the least amount of valid data, and is not selected in response to specific write and delete operations performed by the host. Selection of pink blocks as flush blocks in this manner allows performance of block flush operations with a minimum relocation of valid data because any pink block so selected will have accumulated a maximum number of unallocated data addresses due to deletion of files by the host.

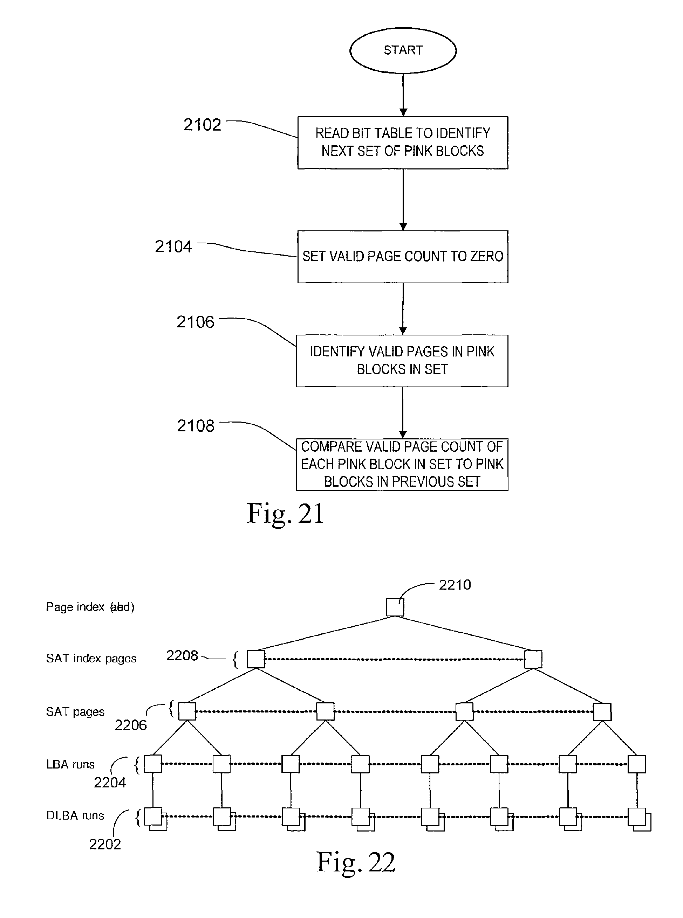

One example of a pink block selection process may be to select any pink block that is among the 5% of pink blocks with the lowest number of valid pages or clusters. In a background process, a list of the 16 pink blocks with the lowest page or cluster count values is built. The pink block identification process may complete one cycle in the time occupied by "P" scheduled block flush operations. A cycle in a flush block identification process is illustrated in FIG. 21. A block information table (BIT) containing lists of block addresses for white, pink and other types of DLBA address blocks is separately maintained by the storage address re-mapping function for each bank 107A-107B, as described in greater detail below, and is read to identify the next set of Q pink blocks, following the set of blocks identified during the previous process cycle (at step 2102). Independently for each bank, the first set of pink blocks should be identified in the first process cycle after device initialization. In order to ensure the availability of flush blocks, the value of Q should be greater than that of P. In one implementation, the value of Q may be 8 and P may be 4. A valid page count value is set to zero for each of the pink blocks in the set (at step 2104). Storage address table (SAT) page entries that are maintained to track the LBA and DLBA relationships are scanned one at a time, to identify valid data pages that are located in any pink block in the set (at step 2106). The storage address table is described in greater detail below. Valid page count values are incremented accordingly. After all SAT pages have been scanned, the valid page count values for each of the pink blocks in the set are evaluated against those for pink blocks in the list for low valid page count values, and blocks in the list are replaced by blocks from the set, if necessary (at step 2108). After completion of a block flush operation, a block should be selected for the next block flush operation. This should be the block with the lowest valid page count value in the list.

Prior to beginning a block flush operation in a particular bank 107A-107D , such as described with respect to FIGS. 19-20, the selected block must be mapped to determine the locations of valid DLBA runs that must be relocated. This is achieved by a search algorithm that makes use of LBA addresses in the headers of selected pages of data that are read from the block, and the SAT entries for these LBA addresses. The search algorithm makes use of a map of known valid and obsolete DLBA runs that it gradually builds up. A valid DLBA run is added to the block map when SAT entries define its presence in the block. An obsolete DLBA run is added to the block map when SAT entries for a range of LBAs in data page headers in the block being mapped define the presence of a valid DLBA in another block. The search process continues until all DLBA addresses in the block have been unambiguously mapped as valid or obsolete.

In a block flush operation, all pages within valid DLBA runs identified in the block mapping process noted above are relocated from the selected pink block to the relocation pointer in the relocation block in the same bank. Entries for the relocated DLBAs are recorded in the SAT list. The search for valid and obsolete DLBA runs may be executed by the controller 108 of the memory system 102 in the case of the arrangement illustrated in FIG. 11, and the block DLBA map may be stored in RAM associated with the controller. For the arrangement of FIG. 12, a CPU 109 at the host system 100 may execute the search and store the resulting block DLBA information in RAM associated with the host system CPU.

The storage address re-mapping algorithm for multi-bank memory arrangements operates on the principle that, when the number of white blocks in a particular bank has fallen below a predefined threshold, flush operations on pink blocks in that bank must be performed at a sufficient rate to ensure that usable white block capacity that can be allocated for the writing of data is created at the same rate as white block capacity is consumed by the writing of host data in the write block. The number of pages in the write block consumed by writing data from the host must be balanced by the number of obsolete pages recovered by block flush operations. After completion of a block flush operation, the number of pages of obsolete data in the pink block selected for the next block flush operation is determined, by reading specific entries from the BIT and SAT, as noted above. The next block flush operation may be scheduled to begin immediately after the writing of this number of valid pages of data to the write block. Additionally, thresholds for initiating flush operations may differ for each bank. For example, the threshold for flushing may be adaptive based on the amount of data to be relocated within a bank such that, if the threshold is triggered on the average amount of valid data in pink blocks in a bank, white blocks can be created at roughly the same rate in all banks.

### Storage Address Tables

In order to implement the storage address re-mapping described above, a storage address table (SAT) 1704 such as generally described with reference to FIG. 17 is used to track the location of data within the storage address space. Information in the SAT is also written as part of a sequential update to a complete flash metablock. Accordingly, in one implementation, the SAT information is written to a separate write block from the write block used for data received from the host and separate from the relocation block used for flush operations. In other implementations, the SAT information may be stored in a different group of blocks, for example blocks in a binary flash partition rather than an MLC flash partition occupied by non-SAT information. Alternatively, the SAT and non-SAT data may be stored, but segregated by block, in the same type of flash block. In yet other embodiments, SAT and non-SAT data may be intermingled in the same block. Although the SAT 1704 may be a single table for all banks 107A-107D in a multi-bank memory 107, in other embodiments each bank may maintain an independent SAT only mapping information in that particular bank.

The SAT relates to each of the embodiments of FIGS. 10-12. Also, although the following discussion is focused on the re-mapping from a host LBA to a second LBA space termed the DLBA (also referred to as the storage LBA) relevant to the host and memory system configurations of FIGS. 11-12, this same SAT technique is applicable to the embodiment of FIG. 10 where data associated with the host LBA addresses is mapped directly to physical blocks without an intervening logical-to-logical translation. The SAT information is preferably stored in flash memory in the memory device regardless of the embodiment discussed. For the embodiment of FIG. 12, where the re-mapping from host LBA to DLBA takes place on the host 1202, the SAT information is transmitted for storage in flash memory in the memory system 1204. For the embodiment of FIG. 10 where the storage address re-mapping algorithm is implemented in the memory manager within the memory system, the term DLBA refers to the physical address in flash memory 107 rather than to a second logical address space as used in the embodiments of FIGS. 11-12, and blocks of DLBA addresses represent metablocks in physical memory.

The storage address table (SAT) contains correlation information relating the LBA addresses assigned by a host file system to the DLBA addresses. More specifically, the SAT is used to record the mappings between every run of addresses in LBA address space that are allocated to valid data by the host file system and one or more runs of addresses in the DLBA address space that are created by the storage address re-mapping algorithm. As noted above, the unit of system address space is the LBA and an LBA run is a contiguous set of LBA addresses which are currently allocated to valid data by the host file system. An LBA run is often bounded by unallocated LBA addresses, however an LBA run may be managed as multiple smaller LBA runs if required by the SAT data structure. The unit of device address space is the DLBA, and a DLBA run is a contiguous set of DLBA addresses that are mapped to contiguous LBA addresses in the same LBA run. A DLBA run is terminated at a block boundary in DLBA address space. Each LBA run is mapped to one or more DLBA runs by the SAT. The length of an LBA run is equal to the cumulative length of the DLBA runs to which it is mapped.

The SAT entry for an LBA run contains a link to an entry for the first DLBA run to which it is mapped and the bank the DLBA run is located in. Subsequent DLBA runs to which it may also be mapped are sequential entries immediately following this run. A DLBA run contains a backward link to its offset address within the LBA run to which it is mapped, but not to the absolute LBA address of the LBA run. An individual LBA address can be defined as an LBA offset within an LBA run. The SAT records the LBA offset that corresponds to the beginning of each DLBA run that is mapped to the LBA run. An individual DLBA address corresponding to an individual LBA address can therefore be identified as a DLBA offset within a DLBA run. Although the LBA runs in the SAT may be for runs of valid data only, the SAT may also be configured to store LBA runs for both valid and obsolete data in other implementations.

The SAT is implemented within blocks of LBA addresses known as SAT blocks. The SAT includes a defined maximum number of SAT blocks, and contains a defined maximum number of valid SAT pages. The SAT therefore has a maximum number of DLBA runs that it may index, for a specified maximum number of SAT blocks. In one embodiment, although a maximum number of SAT blocks are defined, the SAT is a variable size table that is automatically scalable up to the maximum number because the number of entries in the SAT will adjust itself according to the fragmentation of the LBAs assigned by the host. Thus, if the host assigns highly fragmented LBAs, the SAT will include more entries than if the host assigns less fragmented groups of LBAs to data. Accordingly, if the host LBAs become less fragmented, the size of the SAT will decrease. Less fragmentation results in fewer separate runs to map and fewer separate runs leads to fewer entries in the SAT because the SAT maps a run of host LBA addresses to one or more DLBA runs in an entry rather than rigidly tracking and updating a fixed number logical addresses.

Due to the LBA run to DLBA run mapping arrangement of the SAT of FIG. 17, a run of host LBA addresses may be mapped to two or more DLBA runs, where the host LBA run is a set of contiguous logical addresses that is allocated to valid data and the DLBA (or storage LBA) run is a contiguous set of DLBA addresses within the same metablock and mapped to the same host LBA run. A hierarchy of the SAT indexing and mapping structures is illustrated in FIG. 22. The LBA 2204 and corresponding DLBA 2202 runs are shown. LBA to DLBA mapping information is contained in the SAT pages 2206. LBA to SAT page indexing information is contained in the SAT index pages 2208 and a master page index 2210 is cached in RAM associated with the host processor for the implementation of FIG. 12 and in RAM 212 associated with the controller 108 for the implementations of FIGS. 10-11.

The SAT normally comprises multiple SAT blocks, but SAT information may only be written to a single block currently designated the SAT write block. All other SAT blocks have been written in full, and may contain a combination of valid and obsolete pages. A SAT page contains entries for all LBA runs within a variable range of host LBA address space, together with entries for the runs in device address space to which they are mapped. A large number of SAT pages may exist. A SAT index page contains an index to the location of every valid SAT page within a larger range of host LBA address space. A small number of SAT index pages exist, which is typically one. Information in the SAT is modified by rewriting an updated page at the next available location in a single SAT write block, and treating the previous version of the page as obsolete. A large number of invalid pages may therefore exist in the SAT. SAT blocks are managed by algorithms for writing pages and flushing blocks that are analogous to those described above for host data with the exception that the SAT pages are written to individual blocks in a bank and not to megablocks, and that valid data from pink SAT blocks are copied to current SAT write blocks rather than separate relocation blocks.

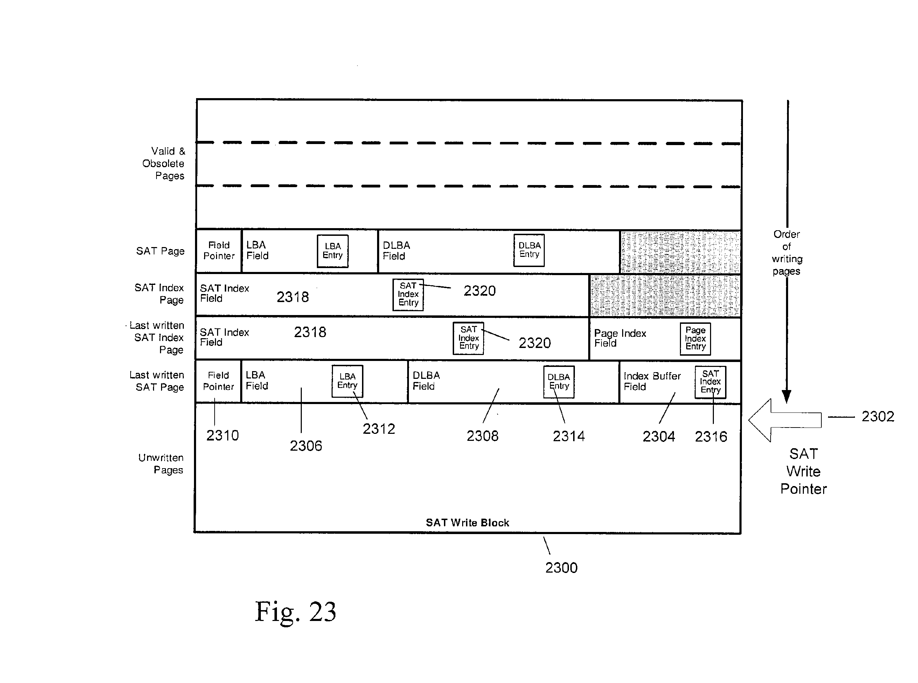

Each SAT block is a block of DLBA addresses that is dedicated to storage of SAT information. A SAT block is divided into table pages, into which a SAT page 2206 or SAT index page 2208 may be written. A SAT block may contain any combination of valid SAT pages 2206, valid SAT index pages 2208 and obsolete pages. Referring to FIG. 23, a sample SAT write block 2300 is shown. Data is written in the SAT write block 2300 at sequential locations defined by an incremental SAT write pointer 2302. Data may only be written to the single SAT block that is designated as the SAT write block 2300. In the same fashion as for host data write blocks described previously, only when the SAT write block 2300 has been fully written, a white block is allocated as the new SAT write block 2300. A SAT page location is addressed by its sequential number within its SAT block. In one embodiment, where a single SAT is maintained for all banks, the controller may select to alternate which of the banks 107A-107D to use to allocate a new SAT white block. In this manner disproportionate use of one bank for storing the SAT may be avoided.

### SAT Page

A SAT page 2206 is the minimum updatable unit of mapping information in the SAT. An updated SAT page 2206 is written at the location defined by the SAT write pointer 2302. A SAT page 2206 contains mapping information for a set of LBA runs with incrementing LBA addresses, although the addresses of successive LBA runs need not be contiguous. The range of LBA addresses in a SAT page 2206 does not overlap the range of LBA addresses in any other SAT page 2206. SAT pages 2206 may be distributed throughout the complete set of SAT blocks without restriction. The SAT page 2206 for any range of LBA addresses may be in any SAT block. A SAT page 2206 may include an index buffer field 2304, LBA field 2306, DLBA field 2308 and a control pointer 2310. Parameter backup entries also contain values of some parameters stored in volatile RAM.

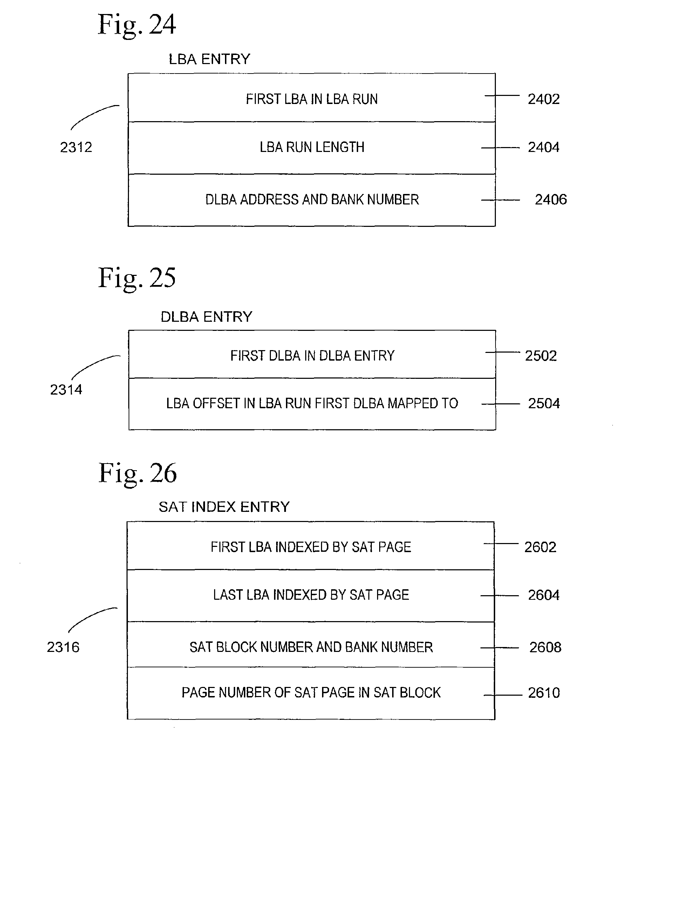

The LBA field 2306 within a SAT page 2206 contains entries for runs of contiguous LBA addresses that are allocated for data storage, within a range of LBA addresses. The range of LBA addresses spanned by a SAT page 2206 does not overlap the range of LBA entries spanned by any other SAT page 2206. The LBA field is of variable length and contains a variable number of LBA entries. Within an LBA field 2306, an LBA entry 2312 exists for every LBA run within the range of LBA addresses indexed by the SAT page 2206. An LBA run is mapped to one or more DLBA runs. As shown in FIG. 24, an LBA entry 2312 contains the following information: first LBA in run 2402, length of LBA run 2404, in sectors, and DLBA entry number and bank number, within the DLBA field in the same SAT page 2206, of the first DLBA run to which LBA run is mapped 2406.

The DLBA field 2308 within a SAT page 2206 contains entries for all runs of DLBA addresses that are mapped to LBA runs within the LBA field in the same SAT page 2206. The DLBA field 2308 is of variable length and contains a variable number of DLBA entries 2314. Within a DLBA field 2308, a DLBA entry 2314 exists for every DLBA run that is mapped to an LBA run within the LBA field 2306 in the same SAT page 2206. Each DLBA entry 2314, as shown in FIG. 25, contains the following information: the first DLBA address in run 2502 and LBA offset in the LBA run to which the first DLBA address is mapped 2504. The SAT page / index buffer field that is written as part of every SAT page 2206, but remains valid only in the most recently written SAT page 2206, contains SAT index entries 2316. In an embodiment where a single SAT is maintained for the multi-bank memory 107 the bank number is also included with the entry 2502 of first DLBA in the run. In an alternative embodiment, where a separate SAT is maintained in each bank, no bank information is necessary in the DLBA entry 2314 because the starting DLBA address is already bank specific.

A SAT index entry 2316, shown in FIG. 26, exists for every SAT page 2206 in the SAT which does not currently have a valid entry in the relevant SAT index page 2208. A SAT index entry is created or updated whenever a SAT page 2206 is written, and is deleted when the relevant SAT index page 2208 is updated. It contains the first LBA indexed 2602 by the SAT page 2206, the last LBA indexed 2604 by the SAT page 2206, SAT block number and bank number 2606 containing the SAT page 2206, and a page number 2608 of the SAT page 2206 within the SAT block. The SAT index field 2318 has capacity for a fixed number of SAT index entries 2320. This number determines the relative frequencies at which SAT pages 2206 and SAT index pages 2208 may be written. In one implementation, this fixed number may be 32.

The SAT page field pointer 2310 defines the offset from the start of the LBA field to the start of the DLBA field. It contains the offset value as a number of LBA entries. Parameter backup entries in an SAT page 2206 contain values of parameters stored in volatile RAM. These parameter values are used during initialization of information in RAM (associated with the controller 108 for the implementations of FIGS. 8-9, or associated with the host CPU for the implementation of FIGS. 10) after a power cycle. They are valid only in the most recently written SAT page 2206.

### SAT Index Page

A set of SAT index pages 2208 provide an index to the location of every valid SAT page 2206 in the SAT. An individual SAT index page 2208 contains entries 2320 defining the locations of valid SAT pages relating to a range of LBA addresses. The range of LBA addresses spanned by a SAT index page 2208 does not overlap the range of LBA addresses spanned by any other SAT index page 2208. The entries are ordered according to the LBA address range values of the SAT pages to which they relate. A SAT index page 2208 contains a fixed number of entries. SAT index pages 2208 may be distributed throughout the complete set of SAT blocks without restriction. The SAT index page 2208 for any range of LBA addresses may be in any SAT block. A SAT index page 2208 comprises a SAT index field and a page index field.

The SAT index field 2318 contains SAT index entries for all valid SAT pages within the LBA address range spanned by the SAT index page 2208. A SAT index entry 2320 relates to a single SAT page 2206, and contains the following information: the first LBA indexed by the SAT page 2206, the SAT block number containing the SAT page 2206 and the page number of the SAT page 2206 within the SAT block. The page index field contains page index entries for all valid SAT index pages 2208 in the SAT. A page index entry exists for every valid SAT index page 2208 in the SAT, and contains the following information: the first LBA indexed by the SAT index page, the SAT block number containing the SAT index page and the page number of the SAT index page within the SAT block. A page index entry is valid only in the most recently written SAT index page 2208.

### Temporary SAT Data Structures

Although not part of the SAT hierarchy for long term storage of address mapping shown in FIG. 22, additional data structures may be used within a hierarchical procedure for updating the SAT. One such structure is a SAT list comprising LBA entries and corresponding DLBA mappings for new entries for new address mappings resulting from update operations on LBA runs or block flush operations which have not yet been written in a SAT page 2206. The SAT list may be a volatile structure in RAM. Entries in the SAT list are cleared when they are written to a SAT page 2206 during a SAT page update.

### Table Page

A table page is a fixed-size unit of DLBA address space within a SAT block, which is used to store either one SAT page 2206 or one SAT index page 2208. The minimum size of a table page is one page and the maximum size is one metapage, where page and metapage are units of DLBA address space corresponding to page and metapage in physical memory for each bank 107A-107D.

### Entry Sizes in SAT

Sizes of entries within a SAT page 2206 and SAT index page 2208 are shown in Table 1.

**Table 1: SAT Entry Sizes**

| Entry | Range of Addressing | Entry Size in Bytes |
|---|---|---|
| SAT page / LBA field / LBA entry / First LBA | 2048 GB | 4 |
| SAT page / LBA field / LBA entry / Run length | 32 MB | 2 |
| SAT page / LBA field / LBA entry / DLBA entry number | 64K entries | 2 |
| SAT page / DLBA field / DLBA entry / First DLBA | 2048 GB | 4 |
| SAT page / DLBA field / DLBA entry / LBA offset | 32 MB | 2 |
| SAT page / Index buffer field / SAT index entry / First LBA | 2048 GB | 4 |
| SAT page / Index buffer field / SAT index entry / Last LBA | 2048 GB | 4 |
| SAT page / Index buffer field / SAT index entry / SAT block location | 64K blocks | 2 |
| SAT page / Index buffer field / SAT index entry / SAT page location | 64K pages | 2 |
| SAT page / Field pointer | 64K entries | 2 |
| SAT index page / SAT index field / SAT index entry / First LBA | 2048 GB | 4 |
| SAT index page / SAT index field / SAT index entry / SAT block location | 64K blocks | 2 |
| SAT index page / SAT index field / SAT index entry / SAT page location | 64K pages | 2 |
| SAT index page / Page index field / Page index entry / First LBA | 2048 GB | 4 |
| SAT index page / Page index field / Page index entry / SAT block location | 64K blocks | 2 |
| SAT index page / Page index field / Page index entry / SAT page location | 64K pages | 2 |

### Address Translation

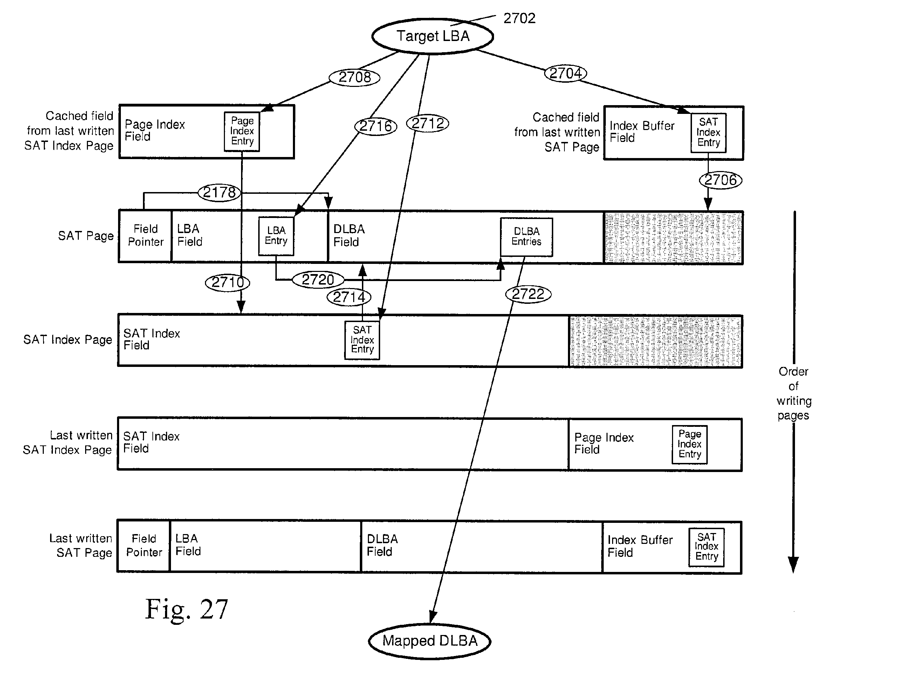

The SAT is useful for quickly locating the DLBA address corresponding to the host file system's LBA address. In one embodiment, only LBA addresses mapped to valid data are included in the SAT. Because SAT pages 2206 are arranged in LBA order with no overlap in LBA ranges from one SAT page 2206 to another, a simple search algorithm may be used to quickly home in on the desired data. An example of this address translation procedure is shown in FIG. 27. A target LBA 2702 is first received by the controller or processor (depending on whether the storage address re-mapping implementation is configured as in FIG. 11 or FIG. 12, respectively). In other embodiments, it is contemplated that the SAT may include LBA addresses mapped to valid data and obsolete data and track whether the data is valid or obsolete.

FIG. 27, in addition to illustrating the address translation procedure, also shows how the page index field from the last written SAT index page and the index buffer field from the last written SAT page may be configured. In the implementation of FIG. 27, these two fields are temporarily maintained in volatile memory, such as RAM in the storage device or the host. The page index field in the last written SAT index page includes pointers to every SAT index page. The index buffer field may contain a set of index entries for recently written SAT pages that haven't yet been written into an index page.

Mapping information for a target LBA address to a corresponding DLBA address is held in a specific SAT page 2206 containing all mapping information for a range of LBA addresses encompassing the target address. The first stage of the address translation procedure is to identify and read this target SAT page. Referring to FIG. 27, a binary search is performed on a cached version of the index buffer field in the last written SAT page, to determine if a SAT index entry for the target LBA is present (at step 2704). An entry will be present if the target SAT page has been recently rewritten, but a SAT index page incorporating a SAT index entry recording the new location of the target SAT page has not yet been written. If a SAT index entry for the target LBA is found, it defines the location of the target SAT page and this page is read (at step 2706).

If no SAT index entry for the target LBA is found in step 2704, a binary search is performed on a cached version of the page index field in the last written SAT index page, to locate the SAT index entry for the target LBA (at step 2708). The SAT index entry for the target LBA found in step 2708 defines the location of the SAT index page for the LBA address range containing the target LBA. This page is read (at step 2710). A binary search is performed to locate the SAT index entry for the target LBA (at step 2712). The SAT index entry for the target LBA defines the location of the target SAT page. This page is read (at step 2714).

When the target SAT page has been read at either step 2706 or step 2714, LBA to DLBA translation may be performed as follows. A binary search is performed on the LBA field, to locate the LBA Entry for the target LBA run incorporating the target LBA. The offset of the target LBA within the target LBA run is recorded (at step 2716). Information in the field pointer defines the length of the LBA field for the binary search, and also the start of the DLBA field relative to the start of the LBA field (at step 2718). The LBA Entry found in step 2716 defines the location within the DLBA field of the first DLBA entry that is mapped to the LBA run (at step 2720). The offset determined in step 2716 is used together with one of more DLBA entries located in step 2720, to determine the target DLBA address (at step 2722).

The storage address re-mapping algorithm operates on the principle that, when the number of white blocks has fallen below a predefined threshold, flush (also referred to as relocation) operations on pink blocks must be performed at a sufficient rate to ensure that usable white capacity that can be allocated for the writing of data is created at the same rate as white capacity is consumed by the writing of host data in the write block. Usable white cluster capacity that can be allocated for the writing of data is the capacity in white blocks, plus the white cluster capacity within the relocation block to which data can be written during flush operations.

If the white cluster capacity in pinks blocks that are selected for flush operations occupies x% of each pink block, the new usable capacity created by a flush operation on one pink block is one complete white block that is created from the pink block, minus (100-x)% of a block that is consumed in the relocation block by relocation of data from the block being flushed. A flush operation on a pink block therefore creates x% of a white block of new usable capacity. Therefore, for each write block that is filled by host data that is written, flush operations must be performed on 100/x pink blocks, and the data that must be relocated is (100-x)/x blocks. The ratio of sectors programmed to sectors written by the host is therefore approximately defined as 1 + (100-x)/x.

The percentage of white cluster capacity in an average pink block is determined by the percentage of the total device capacity that is used, and the percentage of the blocks containing data that are red blocks. For example, if the device is 80% full, and 30% of blocks containing data are red blocks, then pink blocks comprise 26.2% white cluster capacity. It is likely unequal distribution of deleting data at LBA addresses in the device will result in some pink blocks having twice the average % of white capacity. Therefore, in this example, pink blocks selected for flush operations will have 52.4% white capacity, i.e. x = 52.4, and the ratio of sectors programmed per sector of data written by the host will be 1.90.

When determining which pink blocks to flush, whether host data pink blocks or SAT pink blocks, the storage address re-mapping algorithm may detect designation of unallocated addresses by monitoring the $bitmap file that is written by NTFS. Flush operations may be scheduled in two ways. Preferably, the flush operation acts as a background operation, and thus functions only while the SSD or other portable flash memory device is idle so that host data write speeds are not affected. Alternatively, the flush operation may be utilized in a foreground operation that is active when the host is writing data. If flush operations are arranged as foreground operations, these operations may be automatically suspended when host activity occurs or when a "flush cache" command signifies potential power-down of the SSD or portable flash memory device. The foreground and background flush operation choice may be a dynamic decision, where foreground operation is performed when a higher flush rate is required than can be achieved during the idle state of the memory device. For example, the host or memory device may toggle between foreground and background flush operations so that the flush rate is controlled to maintain constant host data write speed until the memory device is full. The foreground flush operation may be interleaved with host data write operations. For example, if insufficient idle time is available because of sustained activity at the host interface, the relocation of data pages to perform a block flush operation may be interleaved in short bursts with device activity in response to host commands.

### SAT Update Procedure

Elements within the SAT data structures are updated using the hierarchical procedure shown in Table 2.

**Table 2: Hierarchy of Update Structures for the SAT**

| Structure | Location | Content | Update Trigger |
|---|---|---|---|
| DLBA runs | Write block or relocation block | Host data | Determined by host |
| SAT list | RAM | LBA-to-DLBA mapping entries, not yet written in SAT page | When DLBA run is written to write block or relocation block |
| SAT page | SAT write block | LBA-to-DLBA mapping entries | When SAT list is full, or when a specified amount of host data has been written as DLBA runs |
| SAT index buffer | Last written SAT page | SAT index entries, not yet written in SAT index page | When any SAT page is written |
| SAT index page | SAT write block | SAT index entries | When SAT index buffer becomes full, or when a specified number of SAT index pages need to be updated |

As noted in Table 2, except for DLBA run updates, the SAT updates for a particular structure are triggered by activity in a lower order structure in the SAT hierarchy. The SAT list is updated whenever data associated with a complete DLBA run is written to a write block. One or more SAT pages are updated when the maximum permitted number of entries exists in the SAT list. When a SAT page is updated, one or more entries from the SAT list are added to the SAT page, and removed from the SAT list. The SAT pages that are updated when the SAT list is full may be divided into a number of different groups of pages, and only a single group need be updated in a single operation. This can help minimize the time that SAT update operations may delay data write operations from the host. In this case, only the entries that are copied from the SAT list to the group of SAT pages that have been updated are removed from the SAT list. The size of a group of updated SAT pages may be set to a point that does not interfere with the host system's 100 ability to access the memory system 102. In one implementation the group size may be 4 SAT pages.

The SAT index buffer field is valid in the most recently written SAT page. It is updated without additional programming whenever a SAT page is written. Finally, when the maximum permitted number of entries exists in the SAT index buffer, a SAT index page is updated. During an SAT index page update, one or more entries from the SAT index buffer are added to the SAT index page, and removed from the SAT index buffer. As noted above with respect to update of SAT pages, the SAT index pages that must be updated may be divided into a number of different groups of pages, and only a single group need be updated in a single operation. This minimizes the time that SAT update operations may delay data write operations from the host. Only the entries that are copied from the SAT index buffer to the group of SAT index pages that have been updated are removed from the SAT index buffer. The size of a group of updated SAT index pages may be 4 pages in one implementation.

The number of entries that are required within the LBA range spanned by a SAT page or a SAT index page is variable, and may change with time. It is therefore not uncommon for a page in the SAT to overflow, or for pages to become very lightly populated. These situations may be managed by schemes for splitting and merging pages in the SAT.

When entries are to be added during update of a SAT page or SAT index page, but there is insufficient available unused space in the page to accommodate the change, the page is split into two. A new SAT page or SAT index page is introduced, and LBA ranges are determined for the previously full page and the new empty page that will give each a number of entries that will make them half full. Both pages are then written, in a single programming operation, if possible. Where the pages are SAT pages, SAT index entries for both pages are included in the index buffer field in the last written SAT page. Where the pages are SAT index pages, page index entries are included in the page index field in the last written SAT index page.

When two or more SAT pages, or two SAT index pages, with adjacent LBA ranges are lightly populated, the pages may be merged into a single page. Merging is initiated when the resultant single page would be no more than 80% filled. The LBA range for the new single page is defined by the range spanned by the separate merged pages. Where the merged pages are SAT pages, SAT index entries for the new page and merged pages are updated in the index buffer field in the last written SAT page. Where the pages are SAT index pages, page index entries are updated in the page index field in the last written SAT index page.

After a power cycle, i.e. after power has been removed and restored, it is necessary to reconstruct the SAT list in RAM to exactly the same state it was in prior to the power cycle. This may be accomplished by scanning all write blocks and relocation blocks to identify additional data that has been written since the last SAT page update, from the LBA address information in the data headers. The locations of these blocks and the positions of write and relocation pointers within them at the time of the last SAT page update are also recorded in a field in the last written SAT page. Scanning need therefore only be started at the positions of these pointers.

### Flushing SAT Blocks

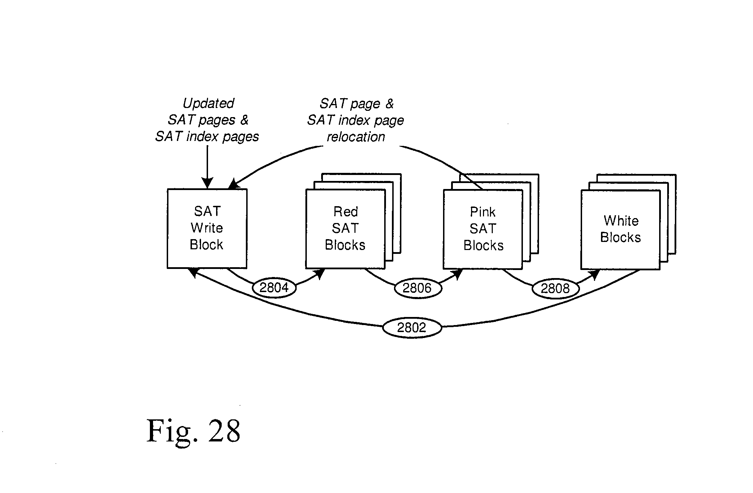

The process of flushing SAT blocks is similar to the process described above for data received from the host, but operates only on SAT blocks. Updates to the SAT brought about by the storage address re-mapping write and flush algorithms cause SAT blocks to make transitions between block states as shown in FIG. 28. First, a white block from the white block list for the bank currently designated to receive the next SAT block is allocated as the SAT write block (at 2802). When the last page in the SAT write block has been allocated, the block becomes a red SAT block (at 2804). It is possible that the SAT write block may also make the transition to a pink SAT block if some pages within it have already become obsolete. However, for purposes of clarity, that transition is not shown in FIG. 28. One or more pages within a red SAT block are made obsolete when a SAT page or SAT index page is updated and the red SAT block becomes a pink SAT block (at 2806). Unlike a flush operation of a pink block containing host data, where valid data is moved to a special write block designated solely for relocated data, the flush operation for a pink SAT block simply relocates the valid SAT data to the current SAT write block. When a flush operation on a selected pink SAT block has been completed, the pink SAT block becomes a white block (at 2808). The SAT pink block is preferably flushed to a SAT write block in the same bank 107A-107D.

The process of selecting which SAT blocks will be subject to a flushing procedure will now be described. A SAT block containing a low number of valid pages or clusters is selected as the next SAT block to be flushed. The block should be amongst the 5% of SAT blocks with the lowest number of valid pages of the SAT blocks in the particular bank. Selection of a block may be accomplished by a background process that builds a list of the 16 SAT blocks with lowest valid page count values in each bank. This process should preferably complete one cycle in the time occupied by M scheduled SAT block flush operations.

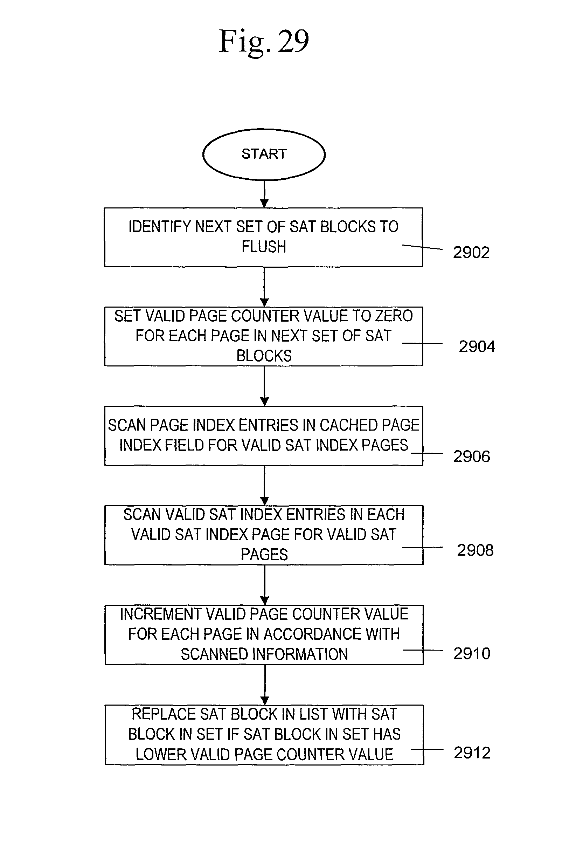

An example of the activity taking place in one cycle of the background process for determining which SAT blocks to flush next is illustrated in FIG. 29. First, the block information table (BIT) for each bank is scanned to identify the next set of N SAT blocks in each respective bank, following the set of blocks identified during the previous process cycle (at step 2902). The first set of SAT blocks should be identified in the first process cycle after device initialisation. The value of N may be selected as appropriate for the particular application and is preferably greater than the value selected for M in order to ensure the availability of SAT flush blocks. As one example, M may be 4 and N may be 8. A valid page count value is set to zero for each of the SAT blocks in the set (at step 2904). Page index entries are then scanned in the cached page index field, to identify valid SAT index pages that are located in any SAT block in the set (at step 2906). Valid page count values are incremented accordingly. SAT index entries are scanned in each SAT index page in turn, to identify valid SAT pages that are located in any SAT block in the set (at step 2908). Valid page count values are incremented accordingly (at step 2910). After the page index and SAT index pages are scanned to determine the valid page count values, the valid page count values for each of the SAT blocks in the set are evaluated against those for SAT blocks in the list for low valid page count values, and blocks in the list are replaces by blocks from the set, if necessary (at step 2912). When a SAT block flush operation should be scheduled, the block with the lowest valid page count value in the list is selected.

In a SAT block flush operation, all valid SAT index pages and SAT pages are relocated from the selected block to the SAT write pointer 2302 of the SAT write block 2300 in the respective bank. The page index field is updated only in the last written SAT index page. In order for the number of SAT blocks to be kept approximately constant, the number of pages in the SAT consumed by update operations on SAT pages and SAT index pages must be balanced by the number of obsolete SAT pages and SAT index pages recovered by SAT block flush operations. The number of pages of obsolete information in the SAT block selected for the next SAT flush operation is determined as discussed with reference to FIG. 29 above. The next SAT block flush operation may be scheduled to occur when the same number of valid pages of information has been written to the SAT since the previous SAT flush operation. Also, the controller 108, independently for each block, may select whether to flush a pink block of SAT data or of host data based on an amount of valid data in the pink block or on one or more other parameters.

### Block Information Table (BIT)

The Block Information Table (BIT) is used to record separate lists of block addresses for white blocks, pink blocks, and SAT blocks. In the multi-block memory, a separate BIT is maintained in each bank 107A-107D. A BIT write block contains information on where all other BIT blocks in the same bank are located. In one implementation, it is desirable for the storage address re-mapping algorithm and associated system to maintain a list of white blocks to allow selection of blocks to be allocated as write blocks, relocation blocks or SAT blocks. It is also desirable to maintain a list of pink blocks, to allow selection of pink blocks and SAT blocks to be the subject of block flush operations in each bank. These lists are maintained in a BIT whose structure closely mirrors that of the SAT. In one embodiment, a separate BIT is maintained and stored in each bank 107A-107D. In another embodiment, the BIT may be a single table with information indexed by bank.

### BIT Data Structures

The BIT in each bank is implemented within blocks of DLBA addresses known as BIT blocks. Block list information is stored within BIT pages, and "DLBA block to BIT page" indexing information is stored within BIT index pages. BIT pages and BIT index pages may be mixed in any order within the same BIT block. The BIT may consist of multiple BIT blocks, but BIT information may only be written to the single block that is currently designated as the BIT write block. All other BIT blocks have previously been written in full, and may contain a combination of valid and obsolete pages. A BIT block flush scheme, identical to that for SAT blocks described above, is implemented to eliminate pages of obsolete BIT information and create white blocks for reuse.

### BIT Block

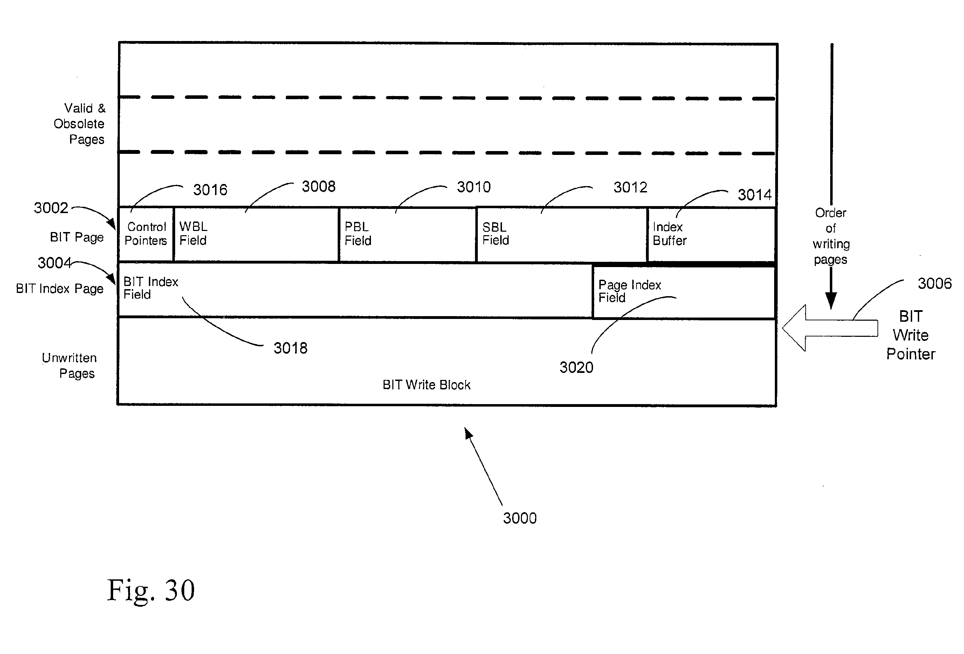

A BIT block, as shown in FIG. 30, is a block of DLBA addresses that is dedicated to storage of BIT information. It may contain BIT pages 3002 and BIT index pages 3004. A BIT block may contain any combination of valid BIT pages, valid BIT index pages, and obsolete pages. BIT information may only be written to the single BIT block that is designated as the BIT write block 3000. BIT information is written in the BIT write block 3000 at sequential locations defined by an incremental BIT write pointer 3006. When the BIT write block 3000 has been fully written, a white block is allocated as the new BIT write block. The blocks composing the BIT are each identified by their BIT block location, which is their block address within the population of blocks in the device. A BIT block is divided into table pages, into which a BIT page 3002 or BIT index page 3004 may be written. A BIT page location is addressed by its sequential number within its BIT block. BIT information may be segregated from non-BIT information in different blocks of flash memory, may be segregated to a different type of block (e.g. binary vs. MLC) than non-BIT information, or may be mixed with non-BIT information in a block.

A BIT page 3002 is the minimum updatable unit of block list information in the BIT. An updated BIT page is written at the location defined by the BIT write pointer 3006. A BIT page 3002 contains lists of white blocks, pink blocks and SAT blocks with DLBA block addresses within a defined range, although the block addresses of successive blocks in any list need not be contiguous. The range of DLBA block addresses in a BIT page does not overlap the range of DLBA block addresses in any other BIT page. BIT pages may be distributed throughout the complete set of BIT blocks without restriction. The BIT page for any range of DLBA addresses may be in any BIT block. A BIT page comprises a white block list (WBL) field 3008, a pink block list (PBL) field 3010, a SAT block list (SBL) field 3012 and an index buffer field 3014, plus two control pointers 3016. Parameter backup entries also contain values of some parameters stored in volatile RAM.

The WBL field 3008 within a BIT page 3002 contains entries for blocks in the white block list, within the range of DLBA block addresses relating to the BIT page 3002. The range of DLBA block addresses spanned by a BIT page 3002 does not overlap the range of DLBA block addresses spanned by any other BIT page 3002. The WBL field 3008 is of variable length and contains a variable number of WBL entries. Within the WBL field, a WBL entry exists for every white block within the range of DLBA block addresses indexed by the BIT page 3002. A WBL entry contains the DLBA address of the block.

The PBL field 3010 within a BIT page 3002 contains entries for blocks in the pink block list, within the range of DLBA block addresses relating to the BIT page 3002. The range of DLBA block addresses spanned by a BIT page 3002 does not overlap the range of DLBA block addresses spanned by any other BIT page 3002. The PBL field 3010 is of variable length and contains a variable number of PBL entries. Within the PBL field 3010, a PBL entry exists for every pink block within the range of DLBA block addresses indexed by the BIT page 3002. A PBL entry contains the DLBA address of the block.

The SBL 3012 field within a BIT page contains entries for blocks in the SAT block list, within the range of DLBA block addresses relating to the BIT page 3002. The range of DLBA block addresses spanned by a BIT page 3002 does not overlap the range of DLBA block addresses spanned by any other BIT page 3002. The SBL field 3012 is of variable length and contains a variable number of SBL entries. Within the SBL field 3012, a SBL entry exists for every SAT block within the range of DLBA block addresses indexed by the BIT page 3012. A SBL entry contains the DLBA address of the block.

An index buffer field 3014 is written as part of every BIT page 3002, but remains valid only in the most recently written BIT page. The index buffer field 3014 of a BIT page 3002 contains BIT index entries. A BIT index entry exists for every BIT page 3002 in the BIT which does not currently have a valid entry in the relevant BIT index page 3004. A BIT index entry is created or updated whenever a BIT page 3002 is written, and is deleted when the relevant BIT index page 3004 is updated. The BIT index entry may contain the first DLBA block address of the range indexed by the BIT page 3002, the last DLBA block address of the range indexed by the BIT page 3002, the BIT block location containing the BIT page 3002 and the BIT page location of the BIT page within the BIT block. The index buffer field 3014 has capacity for a fixed number of BIT index entries, provisionally defined as 32. This number determines the relative frequencies at which BIT pages 3002 and BIT index pages 3004 may be written.

The control pointers 3016 of a BIT page 3002 define the offsets from the start of the WBL field 3008 of the start of the PBL field 3010 and the start of the SBL field 3012. The BIT page 3002 contains offset values as a number of list entries.

### BIT Index Page

A set of BIT index pages 3004 provide an index to the location of every valid BIT page 3002 in the BIT. An individual BIT index page 3004 contains entries defining the locations of valid BIT pages relating to a range of DLBA block addresses. The range of DLBA block addresses spanned by a BIT index page does not overlap the range of DLBA block addresses spanned by any other BIT index page 3004. The entries are ordered according to the DLBA block address range values of the BIT pages 3002 to which they relate. A BIT index page 3004 contains a fixed number of entries.

BIT index pages may be distributed throughout the complete set of BIT blocks without restriction. The BIT index page 3004 for any range of DLBA block addresses may be in any BIT block. A BIT index page 3004 comprises a BIT index field 3018 and a page index field 3020. The BIT index field 3018 contains BIT index entries for all valid BIT pages within the DLBA block address range spanned by the BIT index page 3004. A BIT index entry relates to a single BIT page 3002, and may contain the first DLBA block indexed by the BIT page, the BIT block location containing the BIT page and the BIT page location of the BIT page within the BIT block.

The page index field 3020 of a BIT index page 3004 contains page index entries for all valid BIT index pages in the BIT. A BIT page index entry exists for every valid BIT index page 3004 in the BIT, and may contain the first DLBA block indexed by the BIT index page, the BIT block location containing the BIT index page and the BIT page location of the BIT index page within the BIT block.

### Maintaining the BIT

A BIT page 3002 is updated to add or remove entries from the WBL 3008, PBL 3010 and SBL 3012. Updates to several entries may be accumulated in a list in RAM and implemented in the BIT in a single operation, provided the list may be restored to RAM after a power cycle. The BIT index buffer field is valid in the most recently written BIT page. It is updated without additional programming whenever a BIT page is written. When a BIT index page is updated, one or more entries from the BIT index buffer are added to the BIT index page, and removed from the BIT index buffer. One or more BIT index pages 3004 are updated when the maximum permitted number of entries exists in the BIT index buffer.

The number of entries that are required within the DLBA block range spanned by a BIT page 3002 or a BIT index page 3004 is variable, and may change with time. It is therefore not uncommon for a page in the BIT to overflow, or for pages to become very lightly populated. These situations are managed by schemes for splitting and merging pages in the BIT.

When entries are to be added during update of a BIT page 3002 or BIT index page 3004, but there is insufficient available unused space in the page to accommodate the change, the page is split into two. A new BIT page 3002 or BIT index page 3004 is introduced, and DLBA block ranges are determined for the previously full page and the new empty page that will give each a number of entries that will make them half full. Both pages are then written, in a single programming operation, if possible. Where the pages are BIT pages 3002, BIT index entries for both pages are included in the index buffer field in the last written BIT page. Where the pages are BIT index pages 3004, page index entries are included in the page index field in the last written BIT index page.

Conversely, when two or more BIT pages 3002, or two BIT index pages 3004, with adjacent DLBA block ranges are lightly populated, the pages may be merged into a single page. Merging is initiated when the resultant single page would be no more than 80% filled. The DLBA block range for the new single page is defined by the range spanned by the separate merged pages. Where the merged pages are BIT pages, BIT index entries for the new page and merged pages are updated in the index buffer field in the last written BIT page. Where the pages are BIT index pages, page index entries are updated in the page index field in the last written BIT index page.

### Flushing BIT Blocks

The process of flushing BIT blocks closely follows that described above for SAT blocks and is not repeated here.

### Control Block

In other embodiments, BIT and SAT information may be stored in different pages of the same block. This block, referred to as a control block, may be structured so that a page of SAT or BIT information occupies a page in the control block. The control block may consist of page units having an integral number of pages, where each page unit is addressed by its sequential number within the control block. A page unit may have a minimum size in physical memory of one page and a maximum size of one metapage. The control block may contain any combination of valid SAT pages, SAT index pages, BIT pages, BIT Index pages, and obsolete pages. Thus, rather than having separate SAT and BIT blocks, both SAT and BIT information may be stored in the same block or blocks. As with the separate SAT and BIT write blocks described above, control information (SAT or BIT information) may only be written to a single control write block, a control write pointer would identify the next sequential location for receiving control data, and when a control write block is fully written a write block is allocated as the new control write block. Furthermore, control blocks may each be identified by their block address in the population of binary blocks in the memory system 102. Control blocks may be flushed to generate new unwritten capacity in the same manner as described for the segregated SAT and BIT blocks described above, with the difference being that a relocation block for a control block may accept pages relating to valid SAT or BIT information. Selection and timing of an appropriate pink control block for flushing may be implemented in the same manner as described above for the SAT flush process.

### Monitoring LBA Allocation Status

The storage address re-mapping algorithm records address mapping information only for host LBA addresses that are currently allocated by the host to valid data. It is therefore necessary to determine when clusters are de-allocated from data storage by the host, in order to accurately maintain this mapping information.

In one embodiment, a command from the host file system may provide information on de-allocated clusters to the storage address re-mapping algorithm. For example, a "Dataset" Command has been proposed for use in Microsoft Corporation's Vista operating system. A proposal for "Notification of Deleted Data Proposal for ATA8-ACS2" has been submitted by Microsoft to T13. This new command is intended to provide notification of deleted data. A single command can notify a device of deletion of data at contiguous LBA addresses, representing up to 2GB of obsolete data.

### Interpreting NTFS Metadata

If a host file system command such as the trim command is not available, LBA allocation status may be monitored by tracking information changes in the $bitmap system file written by NTFS, which contains a bitmap of the allocation status of all clusters on the volume. One example of tracking the $bitmap changes in personal computers (PCs) is now discussed.

### Partition Boot Sector

The partition boot sector is sector 0 on the partition. The field at byte offset 0x30 contains the logical cluster number for the start of the Master File Table (MFT), as in the example to Table 3.

**Table 3**

| Byte offset in partition boot sector | | | | | | | | MFT cluster |
|---|---|---|---|---|---|---|---|---|
| 0x30 | 0x31 | 0x32 | 0x33 | 0x34 | 0x35 | 0x36 | 0x37 | |
| D2 | 4F | 0C | 00 | 00 | 00 | 00 | 00 | 0xC4FD2 |

### A $bitmap Record in MFT

A system file named $bitmap contains a bitmap of the allocation status of all clusters on the volume. The record for the $bitmap file is record number 6 in the MFT. An MFT record has a length of 1024 bytes. The $bitmap record therefore has an offset of decimal 12 sectors relative to the start of the MFT. In the example above, the MFT starts at cluster 0xC4FD2, or 806866 decimal, which is sector 6454928 decimal. The $bitmap file record therefore starts at sector 6454940 decimal.

The following information exists within the $bitmap record (in the example being described). The field at byte offset 0x141 to 0x142 contains the length in clusters of the first data attribute for the $bitmap file, as in the example of Table 4.

**Table 4**

| Byte offset in $bitmap record | | Data attribute length |
|---|---|---|
| 0x141 | 0x142 | |
| FB | 00 | 0xFB |

The field at byte offset 0x143 to 0x145 contains the cluster number of the start of the first data attribute for the $bitmap file, as in the example of Table 5.

**Table 5**

| Byte offset in $bitmap record | | | Data attribute cluster |
|---|---|---|---|
| 0x143 | 0x144 | 0x145 | |
| 49 | 82 | 3E | 0x3E8249 |

The field at byte offset 0x147 to 0x148 contains the length in clusters of the second data attribute for the $bitmap file, as in the example of Table 6.

**Table 6**

| Byte offset in $bitmap record | | Data attribute length |
|---|---|---|
| 0x147 | 0x148 | |
| C4 | 00 | 0xC4 |

The field at byte offset 0x149 to 0x14B contains the number of clusters between the start of the first data attribute for the $bitmap file and the start of the second data attribute, as in the example of Table 7.

**Table 7**

| Byte offset in $bitmap record | | | Data attribute cluster jump |
|---|---|---|---|
| 0x149 | 0x14 A | 0x14B | |
| 35 | 82 | 3E | 0x3E8235 |

### Data Attributes for $bitmap File

The sectors within the data attributes for the $bitmap file contain bitmaps of the allocation status of every cluster in the volume, in order of logical cluster number. '1' signifies that a cluster has been allocated by the file system to data storage, '0' signified that a cluster is free. Each byte in the bitmap relates to a logical range of 8 clusters, or 64 decimal sectors. Each sector in the bitmap relates to a logical range of 0x1000 (4096 decimal) clusters, or 0x8000 (32768 decimal) sectors. Each cluster in the bitmap relates to a logical range of 0x8000 (32768 decimal) clusters, or 0x40000 (262144 decimal) sectors.

### Maintaining Cluster Allocation Status

Whenever a write operation from the host is directed to a sector within the data attributes for the $bitmap file, the previous version of the sector must be read from the storage device and its data compared with the data that has just been written by the host. All bits that have toggled from the "1" state to the "0" state must be identified, and the corresponding logical addresses of clusters that have been de-allocated by the host determined. Whenever a command, such as the proposed trim command, or NTFS metadata tracking indicates that there has been cluster deallocation by the host, the storage address table (SAT) must be updated to record the de-allocation of the addresses for the designated clusters.

### SAT Mapping of Entire Block of LBA Addresses to DLBA Runs

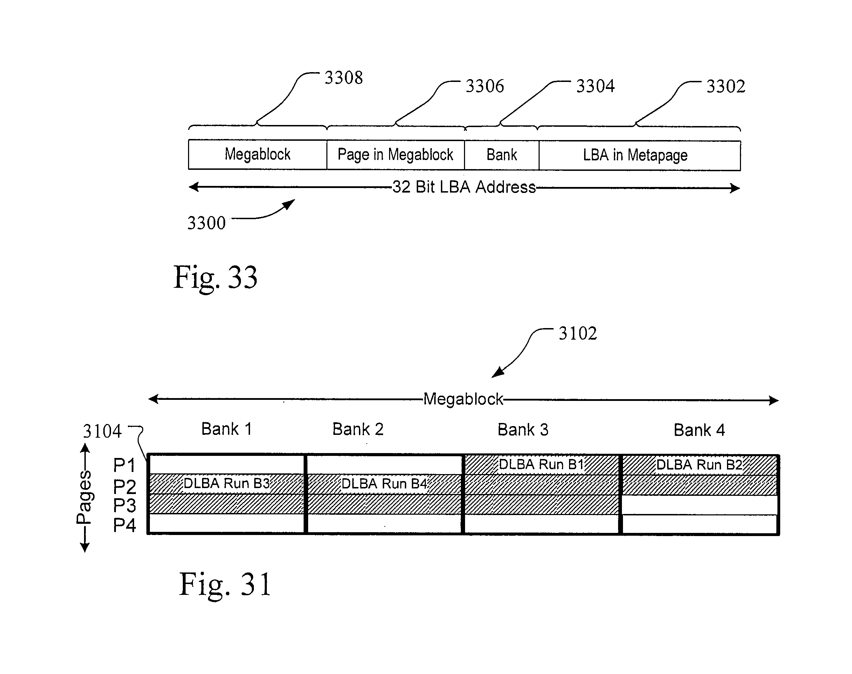

In contrast to the mapping of only valid host LBA runs to runs of DLBA addresses shown in FIG. 17, an alternative method of creating a SAT is illustrated in FIGS. 31-32, where all LBA addresses in a megablock of LBA addresses are mapped regardless of whether the LBA address is associated with valid data. Instead of generating a separate LBA entry in the SAT for each run of LBA addresses associated with valid data, a megablock of LBA addresses may be mapped in the SAT such that each LBA address megablock is a single entry on the SAT.

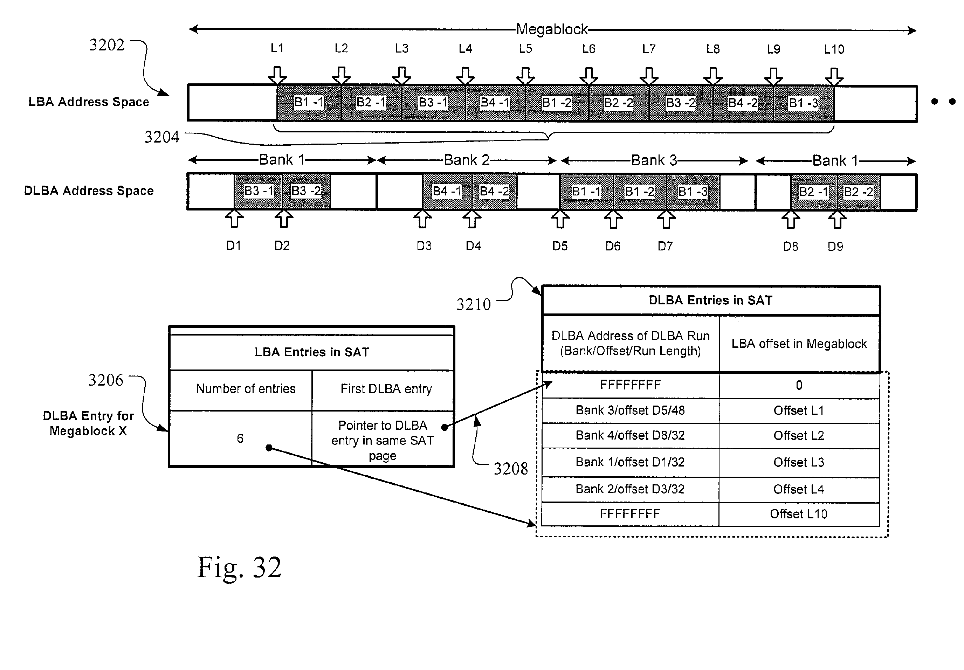

Referring to FIG. 31, a megablock 3102 in DLBA space is illustrated with a single continuous LBA run mapped to DLBA space in the megablock. For simplicity of illustration, the megablock 3102 is presumed to include obsolete data in the beginning (P1 of Banks 1 & 2) of the first megapage 3104. A continuous run of LBA addresses (see FIG. 32) is mapped in megapage order that "stripes" the LBA run across all banks one metapage per bank as described previously, to DLBA addresses beginning at metapage P1, Bank 3 through metapage P3, Bank 3. The remainder of the megablock in FIG. 31 contains obsolete data. As illustrated, each bank contains its own DLBA run (DLBA Runs B1-B4) shown vertically that is discontinuous in LBA address between metapages of the DLBA run in the respective bank because of the (horizontal in this illustration) megapage write algorithm along each successive megapage of continuous LBA addresses.Referring to FIG. 32, the megablock of LBA address space 3202 illustrates a continuous LBA run 3204 that is broken up by metapage and labeled with the DLBA run, and page within the DLBA run, that is shown in FIG. 31. Thus the first metapage in the LBA run 3204 is mapped to DLBA Run B1, first metapage (Bank 3) followed by the next metapage of the LBA run 3204 being mapped to DLBA Run B2, page 1 (Bank 4) and so on.

As illustrated in FIG. 32, a complete LBA address megablock in LBA address space may be recorded as a single LBA entry 3206 in the SAT. The LBA entry 3206 in this implementation lists the number of DLBA runs in that the LBA address megablock is mapped to and a pointer 3208 to the first DLBA entry in the same SAT page. An LBA address megablock may be mapped to a maximum of the number of clusters in the LBA address megablock, depending on the degree of fragmentation of the data stored in the memory device.

In the example of FIG. 32, the LBA address megablock includes 6 LBA runs, where 4 runs are allocated to valid data (shaded portions beginning at LBA offsets L1-L9) and 2 runs are unallocated address runs (white portions beginning at LBA offsets 0 and L10). The corresponding DLBA entries 3210 for the LBA address megablock relate the DLBA address of the DLBA run, denoted by DLBA block, address offset (P1-P3) and length to the corresponding LBA offset. Unlike the version of the SAT discussed above with reference to FIG. 17 that records a separate LBA entry for each LBA run, where only LBA runs associated with valid data are recorded, every LBA run in an LBA address megablock is recorded. Thus, LBA runs in the LBA address block 480 that are not currently allocated to valid data are recorded as well as LBA runs that are allocated to valid data. In the DLBA entry portion 3210 of the SAT page shown in FIG. 32, the LBA offsets marking the beginning of an unallocated set of LBA addresses are paired with an "FFFFFFFF" value in the DLBA address space. This represents a default hexadecimal number indicative of a reserve value for unallocated addresses. The same overall SAT structure and functionality described previously, as well as the basic SAT hierarchy discussed with reference to FIG. 22, applies to the LBA address megablock mapping implementation, however the SAT pages represent LBA address megablock to DLBA run mapping information rather than individual LBA run to DLBA run information. Also, the SAT index page stores LBA address block to SAT page mapping information in this implementation.

Referring to FIG. 33, a sample LBA address format 3300 is shown. The address format 3300 is shown as 32 bits in length, but any of a number of address lengths may be used. The least significant bits may be treated by the controller 108 in the memory system 102 as relating to the LBA address in a metapage 3302 and the next bits in the address may be treated as representing the bank identifier 3304. In the examples above where there are 4 banks 107A-107D, this may be 2 bits of the address. The next bits may be treated as the page in the megablock 3306 that the data is to be associated with and the final bits may be interpreted as the megablock identifier 3308. In one embodiment, the controller may strip off the bits of the bank identifier 3304 so that, although the megablock write algorithm discussed herein will lead to interleaving of LBA addresses within each bank, the DLBA addresses may be continuous within a bank. This may be better understood with reference again to FIG. 31 and the megablock write algorithm. When host data is written to the memory system 102, and the first available portion of a current write megablock is metapage P1 of bank 3, the controller 108 will remove the bank identifier bits as the addresses are re-mapped to P1, Bank 3 and then to P1, Bank 4 after P1, Bank 3 is fully written. As the write algorithm continues to stripe the host data contiguously across the next megapage of the megablock (P2 in each of Banks 1-4, in bank order) the same address procedure may be applied. This will lead to continuous DLBA addressing in each bank when looking at each consecutive page, left to right and vertically down within a bank. The SAT versions of FIG. 17 and 32 will track the bank information so that the data may be read from the memory device accurately, but the flush operations on host data in each bank may be managed with continuous DLBA addresses in each block and bank.

The above discussion has focused primarily on an implementation of storage address re-mapping where a logical to logical mapping, from host LBA address space to DLBA address space (also referred to as storage LBA address space), is desired. This logical-to-logical mapping may be utilized in the configurations of FIGS. 11 and 12. The host data and storage device generated data (e.g. SAT and BIT) that have been re-mapped to DLBA addresses are written to physical addresses of metablocks in the respective banks that currently correspond to the metablocks in DLBA address space. This table, referred to herein as a group address table or GAT, may be a fixed size table having one entry for every logical block in DLBA address space and a physical block granularity of one metablock. In one embodiment, each bank 107A-107D has its own GAT so that the logical block mapping to physical blocks in each bank may be tracked.

### Logical to Physical Mapping

As noted above, in the embodiment of FIG. 10 the storage address re-mapping (STAR) algorithm is incorporated into the memory manager of the memory device rather than in a separate application on the memory device or host as in FIGS. 11-12, respectively. The controller 108 maps host data directly from host LBA to physical addresses in each bank 107A-107D in the memory system 102. In the embodiment of FIG. 10, the DLBA addresses discussed above are replaced by physical memory address rather than an intermediate DLBA (storage LBA) address and, in the SAT, DLBA runs are replaced by data runs. The writing of host data to megablocks of physical addresses in "stripes" along megapages that cross each bank remains the same, as does the independent pink block selection and flushing for each bank of physical blocks. The logical-to-physical embodiment of FIG. 10 also includes the same SAT and BIT (or control) metablock structure with reference to physical addresses and physical data runs in place of the previously discussed DLBA addresses and DLBA runs. The storage re-mapping algorithm in the arrangement of FIG. 10 is part of the memory controller 108 in the memory system 102 rather than a separate application on the memory system 102 or the host 100 (FIGS. 11 and 12, respectively).

With conventional logical-to-physical block mapping, a body of data has to be relocated during a garbage collection operation whenever a fragment of host data is written in isolation to a block of logical addresses. With the storage address re-mapping algorithm, data is always written to sequential addresses until a block (logical or physical) is filled and therefore no garbage collection is necessary. The flush operation in the storage address re-mapping disclosed herein is not triggered by a write process but only in response to data being made obsolete. Thus, the data relocation overhead should be lower in a system having the storage address re-mapping functionality described herein. The combination of the flush operation being biased toward pink blocks having the least amount, or at least less than a threshold amount, of valid data and separate banks being independently flushable can further assist in reducing the amount of valid data that needs to be relocated and the associated overhead.

Systems and methods for storage address re-mapping in a multi-bank memory have been described that can increase performance of memory systems in random write applications, which are characterised by the need to write short bursts of data to unrelated areas in the LBA address space of a device, that may be experienced in solid state disk applications in personal computers. In certain embodiments of the storage address re-mapping disclosed, host data is mapped from a first logical address assigned by the host to a megablocks having metablocks of contiguous logical addresses in a second logical address space. As data associated with fully programmed blocks of addresses is made obsolete, a flushing procedure is disclosed that, independently for each bank, selects a pink block from a group of pink blocks having the least amount of valid data, or having less than a threshold amount of valid data, and relocates the valid data in those blocks so to free up those blocks for use in writing more data. The valid data in a pink block in a bank is contiguously written to a relocation block in the same bank in the order it occurred in the selected pink block regardless of the logical address assigned by the host. In this manner, overhead may be reduced by not purposely consolidating logical address runs assigned by the host. A storage address table is used to track the mapping between the logical address assigned by the host and the second logical address and relevant bank, as well as subsequent changes in the mapping due to flushing. In an embodiment where the logical address assigned by the host is directly mapped into physical addresses, the storage address table tracks that relation and a block information table is maintained to track, for example, whether a particular block is a pink block having both valid and obsolete data or a white block having only unwritten capacity.

## Claims

1. A method of transferring data between a host system (100) and a reprogrammable non-volatile mass storage system (102), the mass storage system (102) having a plurality of banks (107A - 107D) of memory cells wherein each of the plurality of banks (107A - 107D) is arranged in blocks (452, 454; 510, 512, 514, 516) of memory cells that are erasable together, the method comprising:
receiving data associated with host logical block address, hereinafter referred to as LBA, addresses assigned by the host system (100);
**CHARACTERISED BY**:
allocating a megablock (704, 1600, 3102, 3306) of contiguous storage LBA addresses for addressing the data associated with the host LBA addresses, the megablock (704, 1600, 3102, 3306) of contiguous storage LBA addresses comprising at least one metablock (702) of memory cells in each of the plurality of banks (107A-107D) of memory cells and addressing only unwritten capacity upon allocation;
re-mapping each of the host LBA addresses for the received data to the megablock (704, 1600, 3102, 3306) of contiguous storage LBA addresses, wherein each storage LBA address is sequentially assigned in a contiguous manner to the received data in an order the received data is received regardless of the host LBA address; and
flushing (1316) a block (452, 454; 510, 512, 514, 516) in a first of the plurality of banks (107A - 107D) independently of flushing a block (452, 454; 510, 512, 514, 516) in a second of the plurality of banks (107A - 107D), wherein flushing (1316) the block (452, 454; 510, 512, 514, 516) in the first bank (107A - 107D) comprises reassigning host LBA addresses for valid data from storage LBA addresses of the block (452, 454; 510, 512, 514, 516) in the first bank (107A - 107D) to contiguous storage LBA addresses in a first relocation block (452, 454; 510, 512, 514, 516), and wherein flushing the block (452, 454; 510, 512, 514, 516) in the second bank (107A-107D) comprises reassigning host LBA addresses for valid data from storage LBA addresses of the block (452, 454; 510, 512, 514, 516) in the second bank (107A-107D) to contiguous storage LBA addresses in a second relocation block (452, 454; 510, 512, 514, 516).

2. The method of Claim 1, wherein flushing the block (452, 454; 510, 512, 514, 516) in the first bank (107A - 107D) further comprises reassigning host LBA addresses for valid data from storage LBA addresses of the block (452, 454; 510, 512, 514, 516) in the first bank (107A - 107D) only to relocation blocks (452, 454; 510, 512, 514, 516) in the first bank (107A - 107D), and wherein flushing the second block (452, 454; 510, 512, 514, 516) comprises reassigning host LBA addresses for valid data from storage LBA addresses of the block (452, 454; 510, 512, 514, 516) in the second bank (107A - 107D) only to relocation blocks (452, 454; 510, 512, 514, 516) in the second bank (107A - 107D).

3. The method of Claim 2, further comprising allocating a block (452, 454; 510, 512, 514, 516) of contiguous storage LBA addresses in the first bank (107A-107D) as a new relocation block (452, 454; 510, 512, 514, 516), the new relocation block (452, 454; 510, 512, 514, 516) of contiguous storage LBA addresses associated with only unwritten capacity upon allocation, wherein the allocation of the new relocation block (452, 454; 510, 512, 514, 516) is made only upon completely assigning storage LBA addresses in the relocation block (452, 454; 510, 512, 514, 516) in the first bank (107A - 107D).

4. The method of any preceding Claim, wherein re-mapping each of the host LBA addresses for the received data to the megablock (704, 1600, 3102, 3306) of contiguous storage LBA addresses comprises associating storage LBA addresses with host LBA addresses in megapage order for the megablock (704, 1600, 3102, 3306), wherein a megapage comprises a metapage in each block (452, 454; 510, 512, 514, 516) of the megablock (704, 1600, 3102, 3306).

5. The method of any preceding Claim, further comprising recording correlation information identifying a relation of host LBA addresses to storage LBA addresses for each of the plurality of banks (107A - 107D) in a single storage address table.

6. The method of Claim 5, wherein the correlation information comprises only runs of host LBA addresses associated with valid data and storage LBA addresses mapped to the runs of host LBA addresses.

7. The method of Claim 5, wherein the correlation information comprises mapping information for all host LBA addresses in a megablock (704, 1600, 3102, 3306) of host LBA addresses.

8. The method of any of Claims 5 to 7, wherein the single storage address table comprises at least one storage address table block, further comprising allocating a new storage address table write block (452, 454; 510, 512, 514, 516) associated with only unwritten capacity upon allocation when a prior storage address table write block (452, 454; 510, 512, 514, 516) has been completely assigned to correlation information.

9. The method of Claim 8, further comprising allocating the new storage address table write block (452, 454; 510, 512, 514, 516) in a bank (107A - 107D) other than a bank (107A - 107D) containing the prior storage address table write block (452, 454; 510, 512, 514, 516).

10. The method of any preceding Claim, further comprising:
identifying pink blocks in each of the plurality of banks, wherein each pink block comprises a fully written block of storage LBA addresses associated with both valid data and obsolete data; and
for each bank, independently selecting one of the identified pink blocks within the bank for a next flush operation.

11. The method of Claim 10, further comprising maintaining a block information table in each of the plurality of banks, the block information table for a bank comprising a list of pink blocks within the bank.

12. The method of any preceding Claim, wherein independently performing flush operations comprises initiating flush operations based on a first threshold in one of the plurality of banks (107A - 107D) and a second threshold in a second of the plurality of banks (107A - 107D).

13. A mass storage memory system, comprising:
a plurality of banks (107A - 107D) of re-programmable non-volatile memory cells wherein each of the plurality of banks (107A - 107D) is arranged in blocks (452, 454; 510, 512, 514, 516) of memory cells that are erasable together;
an interface adapted to receive data from a host system (100), the data addressed with host logical block address, hereinafter referred to as LBA, addresses; and
a controller in communication with the interface, the controller configured to:
receive, via the interface, data associated with host LBA addresses assigned by the host system (100);
**CHARACTERISED IN THAT**: the controller is further configured to:
allocate a megablock (704, 1600, 3102, 3306) of contiguous storage LBA addresses for addressing the data associated with the host LBA addresses, the megablock (704, 1600, 3102, 3306) of contiguous storage LBA addresses comprising at least one metablock (702) of memory cells in each of the plurality of banks (107A - 107D) of memory cells and addressing only unwritten capacity upon allocation;
re-map each of the host LBA addresses for the received data to the megablock (704, 1600, 3102, 3306) of contiguous storage LBA addresses, wherein each storage LBA address is sequentially assigned in a contiguous manner to the received data in an order the received data is received regardless of the host LBA address; and
flush a block (452, 454; 510, 512, 514, 516) in a first of the plurality of banks (107A - 107D) independently of flushing a block (452, 454; 510, 512, 514, 516) in a second of the plurality of banks (107A-107D), wherein flushing the block (452, 454; 510, 512, 514, 516) in the first bank (107A - 107D) comprises reassigning host LBA addresses for valid data from storage LBA addresses of the block (452, 454; 510, 512, 514, 516) in the first bank (107A - 107D) to contiguous storage LBA addresses in a first relocation block (452, 454; 510, 512, 514, 516), and wherein flushing the block (452, 454; 510, 512, 514, 516) in the second bank (107A - 107D) comprises reassigning host LBA addresses for valid data from storage LBA addresses of the block (452, 454; 510, 512, 514, 516) in the second bank (107A - 107D) to contiguous storage LBA addresses in a second relocation block (452, 454; 510, 512, 514, 516).

## Patentansprüche

1. Verfahren zum Übertragen von Daten zwischen einem Host-System (100) und einem reprogrammierbaren nichtflüchtigen Massenspeichersystem (102), wobei das Massenspeichersystem (102) eine Vielzahl von Bänken (107A - 107D) von Speicherzellen hat, worin jede der Vielzahl von Bänken (107A - 107D) in Blöcken (452, 454; 510, 512, 514, 516) von Speicherzellen angeordnet ist, die zusammen löschbar sind, wobei das Verfahren umfasst:
Empfangen von Daten, die mit der logischen Hostblockadresse assoziiert sind, hierin nachfolgend als LBA-Adressen bezeichnet, die vom Hostsystem (100) zugewiesen werden;
**gekennzeichnet durch**:
Zuweisen eines Megablocks (704, 1600, 3102, 3306) von zusammenhängenden Speicher-LBA-Adressen zum Adressieren der mit den Host-LBA-Adressen assoziierten Daten, wobei der Megablock (704, 1600, 3102, 3306) von zusammenhängenden Speicher-LBA-Adressen mindestens einen Metablock (702) von Speicherzellen in jeder der Vielzahl von Bänken (107A - 107D) von Speicherzellen umfasst und ausschließlich ungeschriebene Kapazität nach Zuweisung adressiert;
Neuabbilden jeder der Host-LBA-Adressen für die empfangenen Daten auf dem Megablock (704, 1600, 3102, 3306) von zusammenhängenden Speicher-LBA-Adressen, worin jede Speicher-LBA-Adresse auf eine zusammenhängende Weise den empfangenen Daten in einer Ordnung sequenziell zugewiesen wird, in der die empfangen Daten empfangen werden, ungeachtet der Host-LBA-Adresse; und
Entleeren (1316) eines Blocks (452, 454; 510, 512, 514, 516) in einer ersten der Vielzahl von Bänken (107A - 107D), unabhängig vom Entleeren eines Blocks (452, 454; 510, 512, 514, 516) in einer zweiten der Vielzahl von Bänken (107A - 107D), worin das Entleeren (1316) des Blocks (452, 454; 510, 512, 514, 516) in der ersten Bank (107A - 107D) das Neuzuweisen von Host-LBA-Adressen für gültige Daten von Speicher-LBA-Adressen des Blocks (452, 454; 510, 512, 514, 516) in der ersten Bank (107A - 107D) an zusammenhängende Speicher-LBA-Adressen in einem ersten Relokationsblock (452, 454; 510, 512, 514, 516) umfasst, und worin das Entleeren des Blocks (452, 454; 510, 512, 514, 516) in der zweiten Bank (107A - 107D) das Neuzuweisen von Host-LBA-Adressen für gültige Daten von Speicher-LBA-Adressen des Blocks (452, 454; 510, 512, 514, 516) in der zweiten Bank (107A - 107D) an zusammenhängende Speicher-LBA-Adressen in einem zweiten Relokationsblock (452, 454; 510, 512, 514, 516) umfasst.

2. Verfahren nach Anspruch 1, worin das Entleeren des Blocks (452, 454; 510, 512, 514, 516) in der ersten Bank (107A - 107D) außerdem das Neuzuweisen von Host-LBA-Adressen für gültige Daten von Speicher-LBA-Adressen des Blocks (452, 454; 510, 512, 514, 516) in der ersten Bank (107A - 107D) ausschließlich an Relokationsblöcke (452, 454; 510, 512, 514, 516) in der ersten Bank (107A - 107D) umfasst, und worin das Entleeren des zweiten Blocks (452, 454; 510, 512, 514, 516) das Neuzuweisen von Host-LBA-Adressen für gültige Daten von Speicher-LBA-Adressen des Blocks (452, 454; 510, 512, 514, 516) in der zweiten Bank (107A - 107D) ausschließlich an Relokationsblöcke (452, 454; 510, 512, 514, 516) in der zweiten Bank (107A - 107D) umfasst.

3. Verfahren nach Anspruch 2, außerdem das Zuweisen eines Blocks (452, 454; 510, 512, 514, 516) von zusammenhängenden Speicher-LBA-Adressen in der ersten Bank (107A - 107D) als einen neuen Relokationsblock (452, 454; 510, 512, 514, 516) umfassend, wobei der neue Relokationsblock (452, 454; 510, 512, 514, 516) von zusammenhängenden Speicher-LBA-Adressen ausschließlich mit ungeschriebener Kapazität nach Zuweisung assoziiert ist, worin die Zuweisung des neuen Relokationsblocks (452, 454; 510, 512, 514, 516) erst nach vollständigem Zuweisen von Speicher-LBA-Adressen im Relokationsblock (452, 454; 510, 512, 514, 516) in der ersten Bank (107A - 107D) gemacht wird.

4. Verfahren nach einem vorhergehenden Anspruch, worin das Neuabbilden einer jeden der Host-LBA-Adressen für die empfangenen Daten auf dem Megablock (704, 1600, 3102, 3306) von zusammenhängenden Speicher-LBA-Adressen das Assoziieren von Speicher-LBA-Adressen mit Host-LBA-Adressen in Megaseitenordnung für den Megablock (704, 1600, 3102, 3306) umfasst, worin eine Megaseite eine Metaseite in jedem Block (452, 454; 510, 512, 514, 516) des Megablocks (704, 1600, 3102, 3306) umfasst.

5. Verfahren nach einem vorhergehenden Anspruch, außerdem das Aufzeichnen von Korrelationsinformation umfassend, die eine Relation von Host-LBA-Adressen zu Speicher-LBA-Adressen für jede der Vielzahl von Bänken (107A - 107D) in einer einzelnen Speicheradresstabelle identifiziert.

6. Verfahren nach Anspruch 5, worin die Korrelationsinformation ausschließlich Reihen von Host-LBA-Adressen umfasst, die mit gültigen Daten und Speicher-LBA-Adressen assoziiert sind, die auf die Reihen von Host-LBA-Adressen abgebildet sind.

7. Verfahren nach Anspruch 5, worin die Korrelationsinformation Abbildungsinformation für alle Host-LBA-Adressen in einem Megablock (704, 1600, 3102, 3306) von Host-LBA-Adressen umfasst.

8. Verfahren nach einem der Ansprüche 5 bis 7, worin die einzelne Speicheradresstabelle mindestens einen Speicheradresstabellenblock umfasst, außerdem das Zuweisen eines neuen Speicheradresstabellen-Schreibblocks (452, 454; 510, 512, 514, 516) umfassend, der mit ausschließlich ungeschriebener Kapazität nach Zuweisung assoziiert ist, wenn ein vorheriger Speicheradresstabellen-Schreibblock (452, 454; 510, 512, 514, 516) vollständig an Korrelationsinformation zugewiesen wurde.

9. Verfahren nach Anspruch 8, außerdem das Zuweisen des neuen Speicheradresstabellen-Schreibblocks (452, 454; 510, 512, 514, 516) in eine Bank (107A - 107D) umfassend, die von einer Bank (107A - 107D) verschieden ist, die den vorherigen Speicheradresstabellen-Schreibblock (452, 454; 510, 512, 514, 516) enthält.

10. Verfahren nach einem vorhergehenden Anspruch, außerdem umfassend:
Identifizieren von Pink-Blöcken in jeder der Vielzahl von Bänken, worin jeder Pink-Block einen vollständig geschriebenen Block von Speicher-LBA-Adressen umfasst, die sowohl mit gültigen Daten als auch veralteten Daten assoziiert sind; und
für jede Bank das unabhängige Auswählen von einem der identifizierten Pink-Blöcke innerhalb der Bank für eine nächste Entleerungsoperation.

11. Verfahren nach Anspruch 10, außerdem das Pflegen einer Blockinformationstabelle in jeder der Vielzahl von Bänken umfassend, wobei die Blockinformationstabelle für eine Bank eine Liste von Pink- Blöcken innerhalb der Bank umfasst.

12. Verfahren nach einem vorhergehenden Anspruch, worin das unabhängige Ausführen von Entleerungsoperationen das Initiieren von Entleerungsoperationen auf der Basis einer ersten Schwelle in einer der Vielzahl von Bänken (107A - 107D) und einer zweiten Schwelle in einer zweiten der Vielzahl von Bänken (107A - 107D) umfasst.

13. Massenspeichersystem, Folgendes umfassend:
eine Vielzahl von Bänken (107A - 107D) von reprogrammierbaren nichtflüchtigen Speicherzellen, worin jede der Vielzahl von Bänken (107A - 107D) in Blöcken (452, 454; 510, 512, 514, 516) von Speicherzellen angeordnet ist, die zusammen löschbar sind;
eine Schnittstelle, angepasst zum Empfangen von Daten von einem Hostsystem (100), wobei die Daten mit logischer Hostblockadresse adressiert sind, hierin nachfolgend als LBA-Adressen bezeichnet; und
eine Steuerung in Kommunikation mit der Schnittstelle, wobei die Steuerung konfiguriert ist zum:
Empfangen über die Schnittstelle von Daten, mit Host-LBA-Adressen assoziiert, die durch das Hostsystem (100) zugewiesen werden;
**dadurch gekennzeichnet, dass**:
die Steuerung außerdem konfiguriert ist zum:
Zuweisen eines Megablocks (704, 1600, 3102, 3306) von zusammenhängenden Speicher-LBA-Adressen zum Adressieren der mit den Host-LBA-Adressen assoziierten Daten, wobei der Megablock (704, 1600, 3102, 3306) von zusammenhängenden Speicher-LBA-Adressen mindestens einen Metablock (702) von Speicherzellen in jeder der Vielzahl von Bänken (107A - 107D) von Speicherzellen umfasst und ausschließlich ungeschriebene Kapazität nach Zuweisung adressiert;
Neuabbilden einer jeden der Host-LBA-Adressen für die empfangenen Daten an den Megablock (704, 1600, 3102, 3306) von zusammenhängenden Speicher-LBA-Adressen, worin jede Speicher-LBA-Adresse auf eine zusammenhängende Weise den empfangenen Daten in einer Ordnung sequenziell zugewiesen wird, in der die empfangen Daten empfangen werden, ungeachtet der Host-LBA-Adresse; und
Entleeren eines Blocks (452, 454; 510, 512, 514, 516) in einer ersten der Vielzahl von Bänken (107A - 107D), unabhängig vom Entleeren eines Blocks (452, 454; 510, 512, 514, 516) in einer zweiten der Vielzahl von Bänken (107A - 107D), worin das Entleeren des Blocks (452, 454; 510, 512, 514, 516) in der ersten Bank (107A - 107D) das Neuzuweisen von Host-LBA-Adressen für gültige Daten von Speicher-LBA-Adressen des Blocks (452, 454; 510, 512, 514, 516) in der ersten Bank (107A - 107D) an zusammenhängende Speicher-LBA-Adressen in einem ersten Relokationsblock (452, 454; 510, 512, 514, 516) umfasst, und worin das Entleeren des Blocks (452, 454; 510, 512, 514, 516) in der zweiten Bank (107A - 107D) das Neuzuweisen von Host-LBA-Adressen für gültige Daten von Speicher-LBA-Adressen des Blocks (452, 454; 510, 512, 514, 516) in der zweiten Bank (107A - 107D) an zusammenhängende Speicher-LBA-Adressen in einem zweiten Relokationsblock (452, 454; 510, 512, 514, 516) umfasst.

## Revendications

1. Procédé de transfert de données entre un système hôte (100) et un système de stockage de masse non volatil reprogrammable (102), le système de stockage de masse (102) présentant une pluralité de bancs (107A - 107D) de cellules de mémoire, dans lequel chaque banc de la pluralité de bancs (107A - 107D) est agencé dans des blocs (452, 454 ; 510, 512, 514, 516) de cellules de mémoire qui sont effaçables ensemble, le procédé comprenant l'étape ci-dessous consistant à :
recevoir des données associées à des adresses de bloc logique d'hôte, ci-après appelées adresses LBA, affectées par le système hôte (100) ;
**caractérisé par** les étapes ci-dessous consistant à :
affecter un mégabloc (704, 1600, 3102, 3306) d'adresses LBA de stockage contigües en vue d'adresser les données associées aux adresses LBA d'hôte, le mégabloc (704, 1600, 3102, 3306) d'adresses LBA de stockage contigües comprenant au moins un métabloc (702) de cellules de mémoire dans chaque banc de la pluralité de bancs (107A - 107D) de cellules de mémoire, et d'adresser une capacité non écrite uniquement suite à une affectation ;
remettre en correspondance chacune des adresses LBA d'hôte, pour les données reçues, sur le mégabloc (704, 1600, 3102, 3306) d'adresses LBA de stockage contigües, dans lequel chaque adresse LBA de stockage est affectée séquentiellement d'une manière contigüe aux données reçues, dans un ordre où les données reçues sont reçues, quelle que soit l'adresse LBA d'hôte ; et
vider (1316) un bloc (452, 454 ; 510, 512, 514, 516) dans un premier banc de la pluralité de bancs (107A- 107D) indépendamment du vidage d'un bloc (452, 454 ; 510, 512, 514, 516) dans un second banc de la pluralité de bancs (107A - 107D), dans lequel le vidage (1316) du bloc (452, 454 ; 510, 512, 514, 516) dans le premier banc (107A - 107D) comprend la réaffectation d'adresses LBA d'hôte pour des données valides, à partir d'adresses LBA de stockage du bloc (452, 454 ; 510, 512, 514, 516) dans le premier banc (107A - 107D), à des adresses LBA de stockage contigües dans un premier bloc de relocalisation (452, 454 ; 510, 512, 514, 516), et dans lequel le vidage du bloc (452, 454 ; 510, 512, 514, 516) dans le second banc (107A -107D) comprend la réaffectation d'adresses LBA d'hôte pour des données valides, à partir d'adresses LBA de stockage du bloc (452, 454 ; 510, 512, 514, 516) dans le second banc (107A -107D), à des adresses LBA de stockage contigües dans un second bloc de relocalisation (452, 454 ; 510, 512, 514, 516).

2. Procédé selon la revendication 1, dans lequel le vidage du bloc (452, 454 ; 510, 512, 514, 516) dans le premier banc (107A - 107D) comprend en outre la réaffectation d'adresses LBA d'hôte pour des données valides, à partir d'adresses LBA de stockage du bloc (452, 454 ; 510, 512, 514, 516) dans le premier banc (107A - 107D), uniquement à des blocs de relocalisation (452, 454 ; 510, 512, 514, 516) dans le premier banc (107A - 107D), et dans lequel le vidage du second bloc (452, 454 ; 510, 512, 514, 516) comprend la réaffectation d'adresses LBA d'hôte pour des données valides, à partir d'adresses LBA de stockage du bloc (452, 454 ; 510, 512, 514, 516) dans le second banc (107A - 107D), uniquement à des blocs de relocalisation (452, 454 ; 510, 512, 514, 516) dans le second banc (107A - 107D).

3. Procédé selon la revendication 2, comprenant en outre l'affectation d'un bloc (452, 454 ; 510, 512, 514, 516) d'adresses LBA de stockage contigües dans le premier banc (107A -107D), en tant que nouveau bloc de relocalisation (452, 454 ; 510, 512, 514, 516), le nouveau bloc de relocalisation (452, 454 ; 510, 512, 514, 516) d'adresses LBA de stockage contigües étant associé à une capacité non écrite uniquement suite à une affection, dans lequel l'affectation du nouveau bloc de relocalisation (452, 454 ; 510, 512, 514, 516) est réalisée uniquement suite à une affectation complète d'adresses LBA de stockage dans le bloc de relocalisation (452, 454 ; 510, 512, 514, 516) dans le premier banc (107A - 107D).

4. Procédé selon l'une quelconque des revendications précédentes, dans lequel la remise en correspondance de chacune des adresses LBA d'hôte pour les données reçues, sur le mégabloc (704, 1600, 3102, 3306) d'adresses LBA de stockage contigües, comporte l'association d'adresses LBA de stockage à des adresses LBA d'hôte dans un ordre de mégapage pour le mégabloc (704, 1600, 3102, 3306), dans lequel une mégapage comprend une métapage dans chaque bloc (452, 454 ; 510, 512, 514, 516) du mégabloc (704, 1600, 3102, 3306).

5. Procédé selon l'une quelconque des revendications précédentes, comprenant en outre l'enregistrement d'informations de corrélation identifiant une relation entre des adresses LBA d'hôte et des adresses LBA de stockage pour chaque banc de la pluralité de bancs (107A - 107D) dans une unique table d'adresses de stockage.

6. Procédé selon la revendication 5, dans lequel les informations de corrélation comportent uniquement des séries d'adresses LBA d'hôte associées à des données valides et des adresses LBA de stockage mises en correspondance sur les séries d'adresses LBA d'hôte.

7. Procédé selon la revendication 5, dans lequel les informations de corrélation comportent des informations de mise en correspondance pour la totalité des adresses LBA d'hôte dans un mégabloc (704, 1600, 3102, 3306) d'adresses LBA d'hôte.

8. Procédé selon l'une quelconque des revendications 5 à 7, dans lequel l'unique table d'adresses de stockage comporte au moins un bloc de table d'adresses de stockage, comprenant en outre l'affectation d'un nouveau bloc d'écriture de table d'adresses de stockage (452, 454 ; 510, 512, 514, 516) associé à une capacité non écrite uniquement suite à une affectation, lorsqu'un précédent bloc d'écriture de table d'adresses de stockage (452, 454 ; 510, 512, 514, 516) a été entièrement affecté à des informations de corrélation.

9. Procédé selon la revendication 8, comprenant en outre l'affectation du nouveau bloc d'écriture de table d'adresses de stockage (452, 454 ; 510, 512, 514, 516) dans un banc (107A - 107D) distinct d'un banc (107A - 107D) contenant le précédent bloc d'écriture de table d'adresses de stockage (452, 454 ; 510, 512, 514, 516).

10. Procédé selon l'une quelconque des revendications précédentes, comprenant en outre les étapes ci-dessous consistant à :
identifier des blocs roses dans chaque banc de la pluralité de bancs, dans lequel chaque bloc rose comprend un bloc totalement écrit d'adresses LBA de stockage associées à la fois à des données valides et des données obsolètes ; et
pour chaque banc, sélectionner de façon indépendante l'un des blocs roses identifiés au sein du banc pour une opération de vidage successive.

11. Procédé selon la revendication 10, comprenant en outre le maintien d'une table d'informations de blocs dans chaque banc de la pluralité de bancs, la table d'informations de blocs pour un banc comprenant une liste de blocs roses au sein du banc.

12. Procédé selon l'une quelconque des revendications précédentes, dans lequel la mise en oeuvre, de manière indépendante, d'opérations de vidage comporte l'initiation d'opérations de vidage sur la base d'un premier seuil dans un banc de la pluralité de bancs (107A - 107D), et d'un second seuil dans un second banc de la pluralité de bancs (107A - 107D).

13. Système de mémoire de stockage de masse, comprenant :
une pluralité de bancs (107A - 107D) de cellules de mémoire non volatile reprogrammables, dans lequel chaque banc de la pluralité de bancs (107A - 107D) est agencé dans des blocs (452, 454 ; 510, 512, 514, 516) de cellules de mémoire qui sont effaçables ensemble ;
une interface apte à recevoir des données en provenance d'un système hôte (100), les données étant adressées avec des adresses de bloc logique d'hôte, ci-après appelées adresses LBA ; et
un contrôleur en communication avec l'interface, le contrôleur étant configuré de manière à :
recevoir, par le biais de l'interface, des données associées à des adresses LBA d'hôte affectées par le système hôte (100) ;
**caractérisé en ce que** :
le contrôleur est en outre configuré de manière à :
affecter un mégabloc (704, 1600, 3102, 3306) d'adresses LBA de stockage contigües en vue d'adresser les données associées aux adresses LBA d'hôte, le mégabloc (704, 1600, 3102, 3306) d'adresses LBA de stockage contigües comprenant au moins un métabloc (702) de cellules de mémoire dans chaque banc de la pluralité de bancs (107A - 107D) de cellules de mémoire, et d'adresser une capacité non écrite uniquement suite à une affectation ;
remettre en correspondance chacune des adresses LBA d'hôte, pour les données reçues, sur le mégabloc (704, 1600, 3102, 3306) d'adresses LBA de stockage contigües, dans lequel chaque adresse LBA de stockage est affectée séquentiellement d'une manière contigüe aux données reçues, dans un ordre où les données reçues sont reçues, quelle que soit l'adresse LBA d'hôte ; et
vider un bloc (452, 454 ; 510, 512, 514, 516) dans un premier banc de la pluralité de bancs (107A- 107D) indépendamment du vidage d'un bloc (452, 454 ; 510, 512, 514, 516) dans un second banc de la pluralité de bancs (107A - 107D), dans lequel le vidage du bloc (452, 454 ; 510, 512, 514, 516) dans le premier banc (107A - 107D) comprend la réaffectation d'adresses LBA d'hôte pour des données valides, à partir d'adresses LBA de stockage du bloc (452, 454 ; 510, 512, 514, 516) dans le premier banc (107A - 107D), à des adresses LBA de stockage contigües dans un premier bloc de relocalisation (452, 454 ; 510, 512, 514, 516), et dans lequel le vidage du bloc (452, 454 ; 510, 512, 514, 516) dans le second banc (107A -107D) comprend la réaffectation d'adresses LBA d'hôte pour des données valides, à partir d'adresses LBA de stockage du bloc (452, 454 ; 510, 512, 514, 516) dans le second banc (107A -107D), à des adresses LBA de stockage contigües dans un second bloc de relocalisation (452, 454 ; 510, 512, 514, 516).
